# EUROPÄISCHE PATENTSCHRIFT

(11) **EP 1 673 418 B1**
(45) Veröffentlichungstag und Bekanntmachung des Hinweises auf die Patenterteilung: **12.08.2015**
(21) Anmeldenummer: 04786989.6
(22) Anmeldetag: 22.09.2004
(51) Int. Cl.: C09K 19/32, C09K 19/42, C09K 19/44, G02F 1/13

(54) **FLÜSSIGKRISTALLINES MEDIUM ENTHALTEND FLUORIERTE INDANVERBINDUNG**
LIQUID CRYSTAL MEDIUM CONTAINING FLUORINATED INDANE COMPOUNDS
MILIEU CRISTAL LIQUIDE CONTENANT UN COMPOSE INDANE FLUORE

(30) Priorität: 17.10.2003 DE 10349148
(43) Veröffentlichungstag der Anmeldung: 28.06.2006
(73) Patentinhaber: Merck Patent GmbH, 64293 Darmstadt (DE)
(72) Erfinder: KLASEN-MEMMER, Melanie, 67259 Heuchelheim (DE); LIETZAU, Lars, 64295 Darmstadt (DE); BREMER, Matthias, 64295 Darmstadt (DE)
(86) Internationale Anmeldenummer: PCT/EP2004/010648
(87) Internationale Veröffentlichungsnummer: WO 2005/037957

(56) Entgegenhaltungen:
- EP-A- 0 637 585
- WO-A-02/46330
- WO-A-03/010120
- WO-A-2004/048500
- DE-A- 19 840 447

## Beschreibung

Die Erfindung betrifft ein flüssigkristallines Medium auf der Basis eines Gemisches von polaren Verbindungen mit negativer dielektrischer Anisotropie, welches mindestens eine Verbindung ausgewählt aus den Formeln I1, I3, I5, I7, I9, I11, I13, I15, I17, I19, I21, I23, I25, I27, I29, I31, I33 und I35, 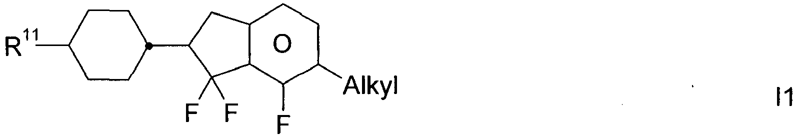 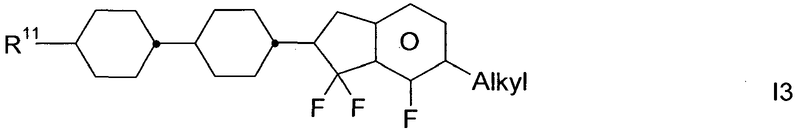 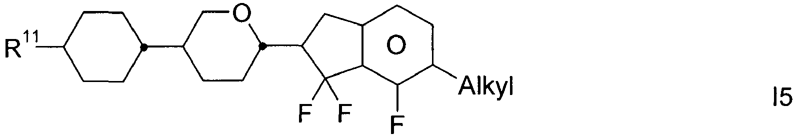 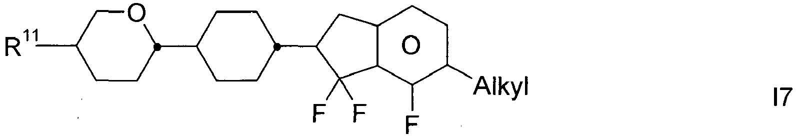 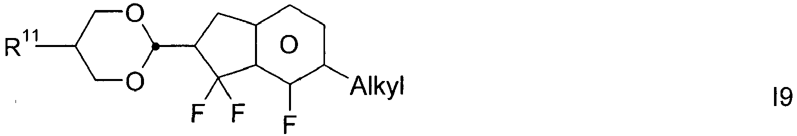 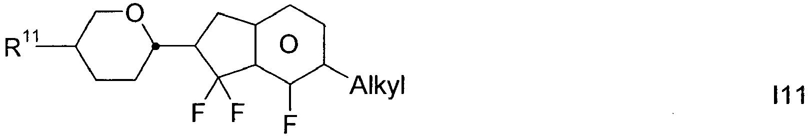 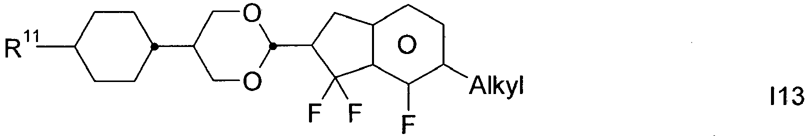 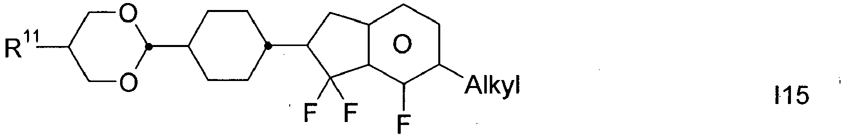 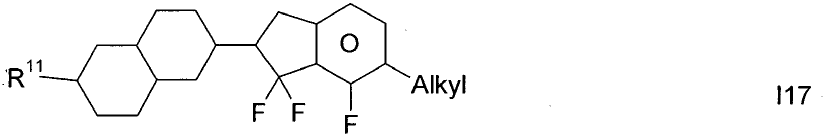 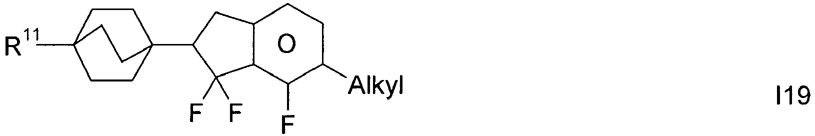 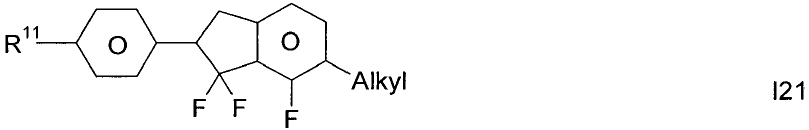 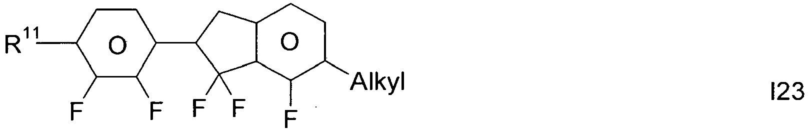 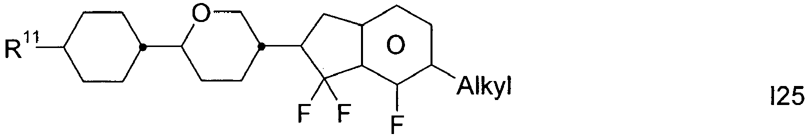 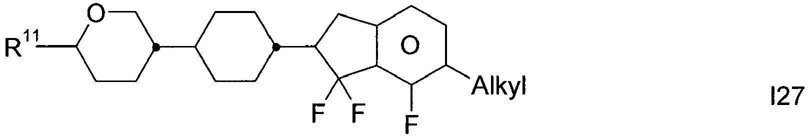 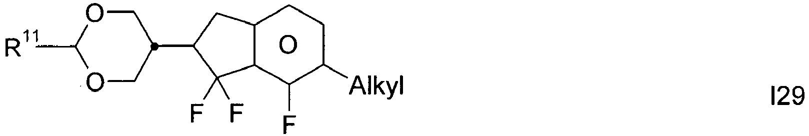 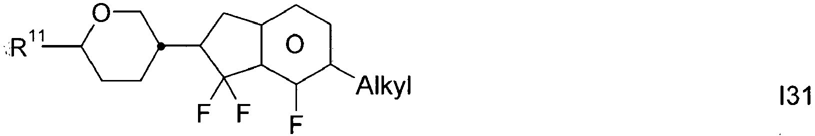 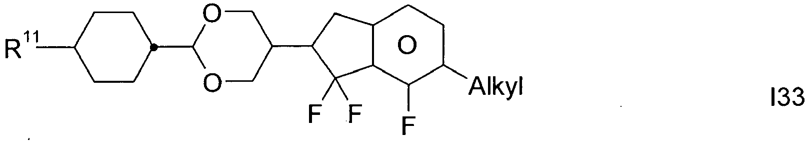 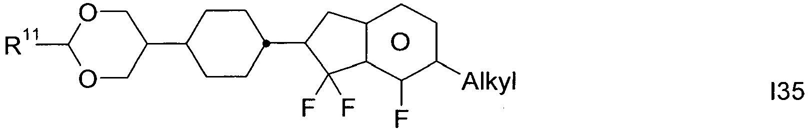 worin
- R¹¹: H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 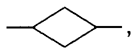 -C≡C-, -OC-O-, oder -O-CO- so ersetzt sein können, dass O-Atome nicht direkt miteinander verknüpft sind,
und
- Alkyl: einen geradkettigen Alkylrest mit 1-6 C-Atomen,
bedeuten,
enthält.

Derartige Medien sind insbesondere für elektrooptische Anzeigen mit einer Aktivmatrix-Addressierung basierend auf dem ECB-Effekt sowie für IPS-Anzeigen (In plane switching) zu verwenden.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε von -0,5 bis -5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf. Auch bei Anzeigen, die den sogenannten IPS-Effekt verwenden, können dielektrisch negative Flüssigkristallmedien zum Einsatz kommen.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten, wie beispielsweise in WO 03/010120 A1 offenbart. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde, MFK-Anzeigen welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen.

Es wurde nun gefunden, dass diese Aufgabe gelöst werden kann, wenn man in diesen Anzeigeelementen nematische Flüssigkristallmischungen verwendet, die mindestens eine Verbindung der Formeln I1, I3, I5, I7, I9, I11, I13, I15, I17, I19, I21, I23, I25, I27, I29, I31, I33 und I35 enthalten.

Gegenstand der Erfindung ist somit ein flüssigkristallines Medium auf der Basis eines Gemisches von polaren Verbindungen mit negativer dielektrischer Anisotropie, welches mindestens eine Verbindung der Formeln I1, I3, I5, I7, I9, I11, I13, I15, I17, I19, I21, I23, I25, I27, I29, I31, I33 und I35 enthält.

Strukturell ähnliche Verbindungen sind z.B. aus der EP 0 637 585 A1 bekannt. Die im Stand der Technik beschriebenen flüssigkristallinen Mischungen sind ausschließlich für ferroelektrische Anwendungen gedacht. Die Verwendung von fluorierten Indanen für ECB- oder IPS-Anzeigen ist nicht bekannt.

Die erfindungsgemäßen Mischungen zeigen sehr günstige Werte für die kapazitive Schwelle, relativ hohe Werte für die Holding Ratio und gleichzeitig eine sehr gute Tieftemperaturstabilität sowie sehr geringe Rötationsviskositäten.

Einige bevorzugte Ausführungsformen werden im folgenden genannt:
a) Flüssigkristallines Medium, welches zusätzlich eine oder mehrere Verbindungen der Formeln IIA und/oder IIB enthält, 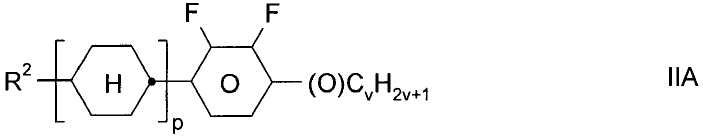 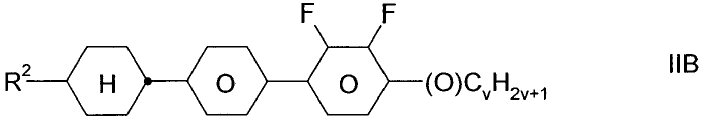 worin
   - R²: die Bedeutung von R¹¹ hat,
   - p: 1 oder 2, und
   - v: 1 bis 6
   bedeutet.
b) Flüssigkristallines Medium, welches zusätzlich eine oder mehrere Verbindungen der Formel III enthält, 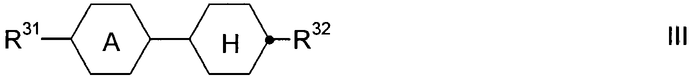 worin
   R³¹ und R³² jeweils unabhängig voneinander einen geradkettigen Alkyl-, Alkylalkoxy- oder Alkoxyrest mit bis zu 12 C-Atomen, und 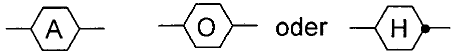 bedeuten.
c) Flüssigkristallines Medium, worin R¹¹ in Formeln I1, I3, I5, I7, I9, I11, I13, I15, I17, I19, I21, I23, I25, I27, I29, I31, I33 und I35 vorzugsweise folgende Bedeutungen haben: geradkettiges Alkyl, Vinyl, 1 E-Alkenyl oder 3-Alkenyl. Falls R¹¹ Alkenyl bedeutet, so ist es vorzugsweise CH₂=CH, CH₃-CH=CH, C₃H₇-CH=CH, CH₂=CH-C₂H₅ oder CH₃-CH=CH-C₂H₅.
d) Flüssigkristallines Medium, wobei der Anteil an Verbindungen der Formeln IIA und/oder IIB im Gesamtgemisch mindestens 20 Gew.-% beträgt.
e) Flüssigkristallines Medium, wobei der Anteil den Verbindungen der Formel III im Gesamtgemisch mindestens 5 Gew.-% beträgt.
f) Flüssigkristallines Medium, welches mindestens eine Verbindung ausgewählt aus den folgenden Teilformeln enthält: 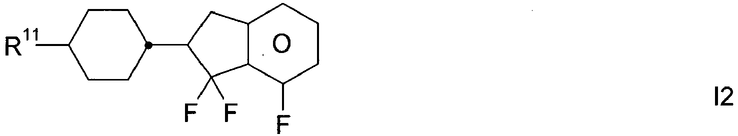 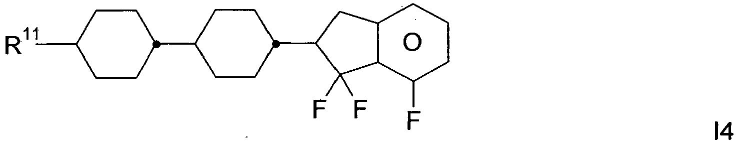 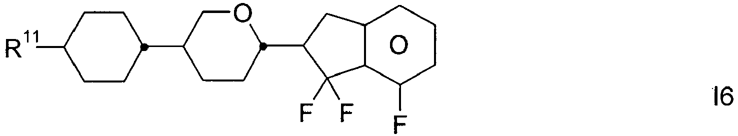 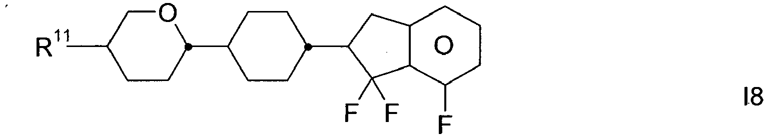 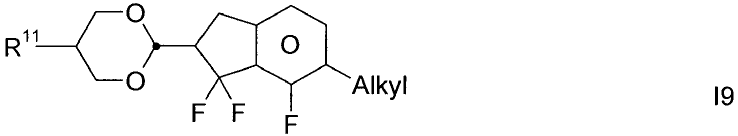 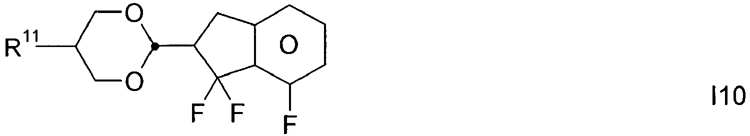 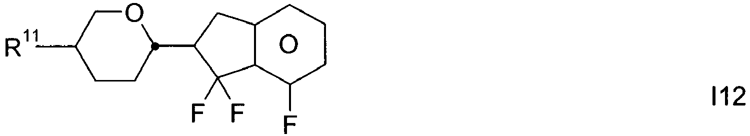 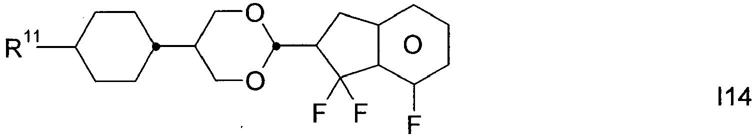 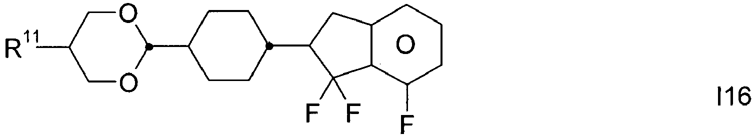 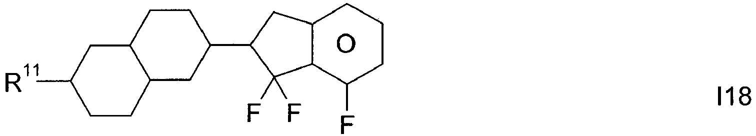 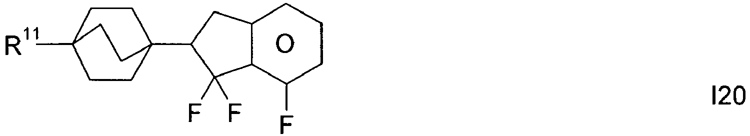 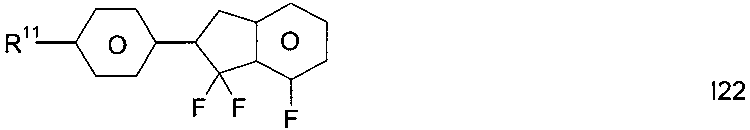 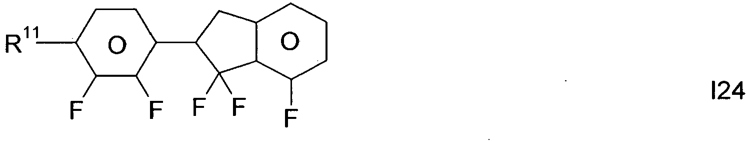 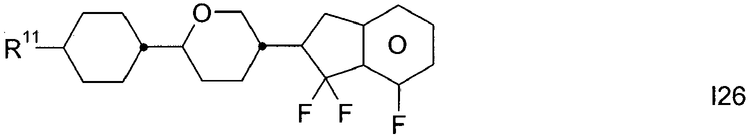 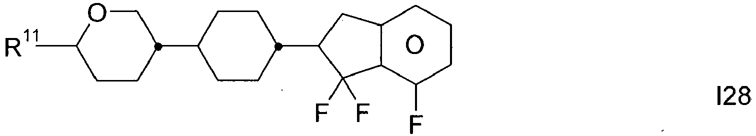 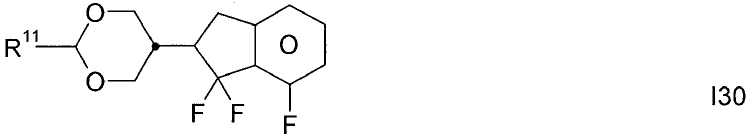 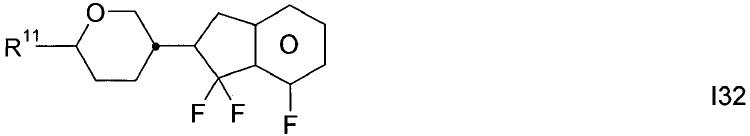 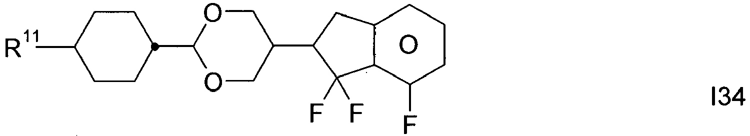 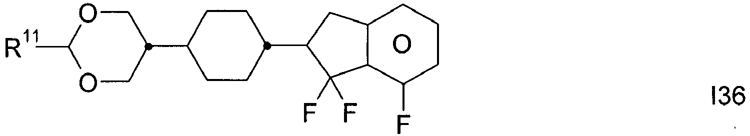 Besonders bevorzugte Medien enthalten eine oder mehrere Verbindungen ausgewählt aus der Gruppe der Verbindungen der Formeln 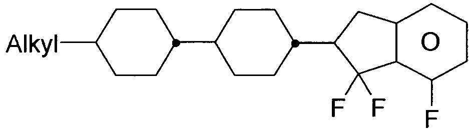 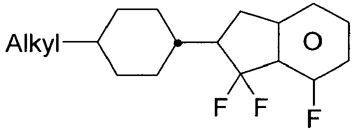 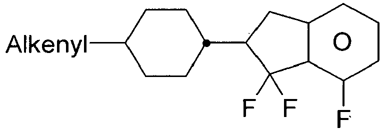 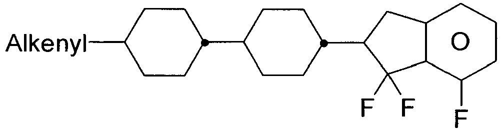 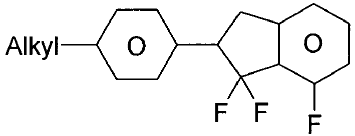 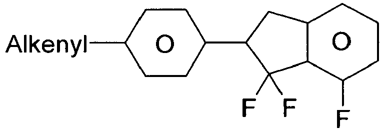
g) Flüssigkristallines Medium, welches zusätzlich eine Verbindung ausgewählt aus den Formeln IIIa bis IIIf enthält: 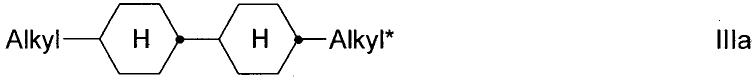 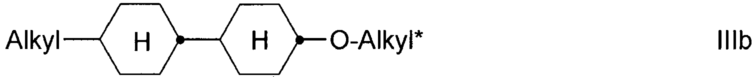 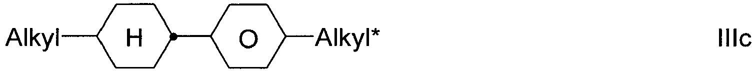 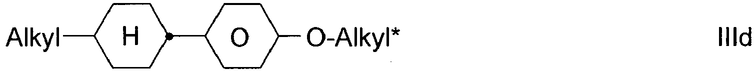 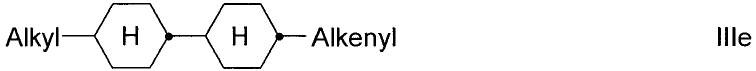 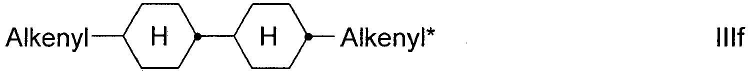
worin
- Alkyl und Alkyl*: jeweils unabhängig voneinander einen geradkettigen Alkylrest mit 1-6 C-Atomen, und
- Alkenyl und Alkenyl*: jeweils unabhängig voneinander einen geradkettigen Alkenylrest mit 2-6 C-Atomen
bedeuten.

Vorzugsweise enthält das erfindungsgemäße Medium mindestens eine Verbindung der Formel IIIa, Formel IIIb und/oder Formel IIIe.

Besonders bevorzugte Verbindungen der Formeln IIIe und IIIf werden nachfolgend genannt: 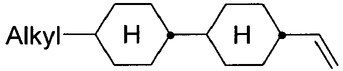 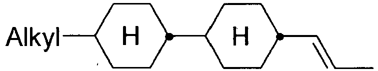 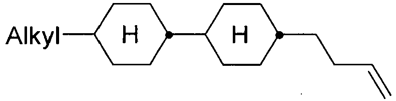 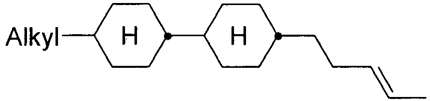 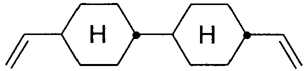 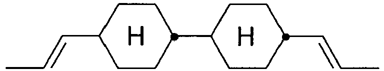 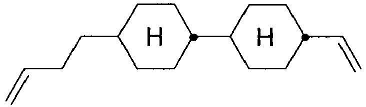 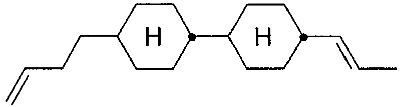 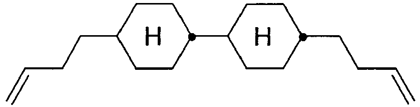
i) Flüssigkristallines Medium, welches zusätzlich eine oder mehrere Vierkernverbindungen der Formeln, 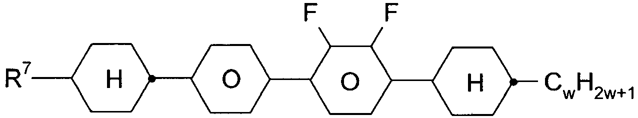 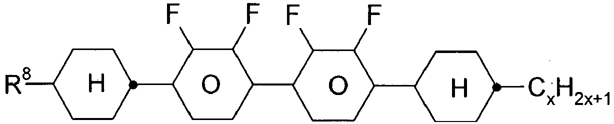 worin
   - R⁷ und R⁸: jeweils unabhängig voneinander eine der in Anspruch 1 für R¹ angegebenen Bedeutung haben, und
   - w und x: jeweils unabhängig voneinander 1 bis 6
   bedeuten,
   enthält.
j) Flüssigkristallines Medium, welches zusätzlich eine oder mehrere Verbindungen der Formeln 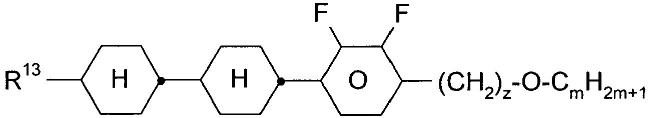 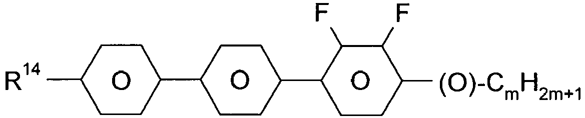 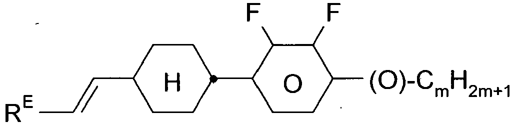 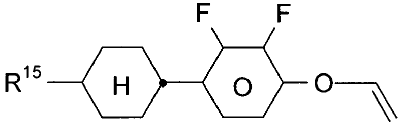 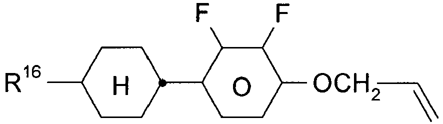 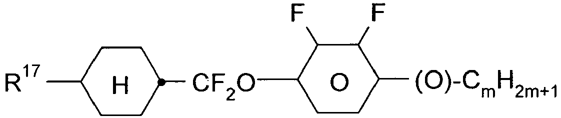 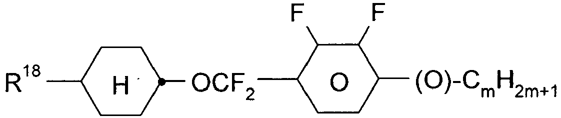 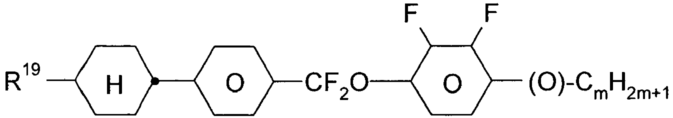 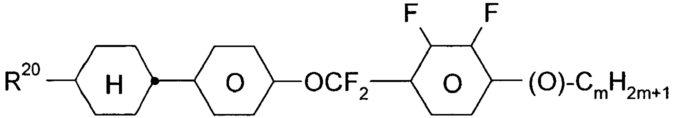 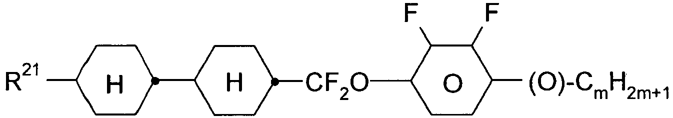 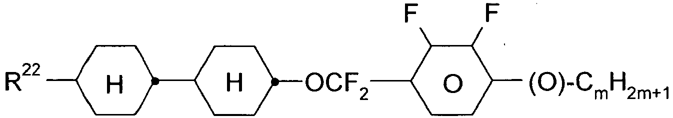 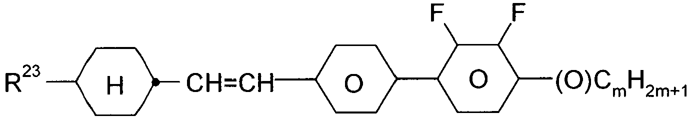 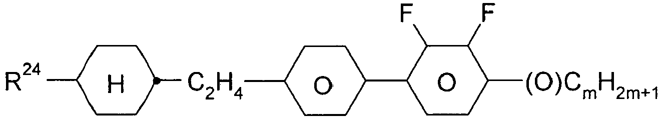 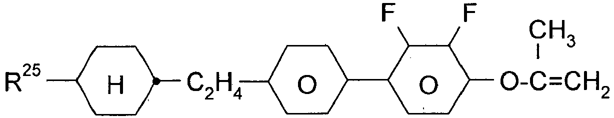 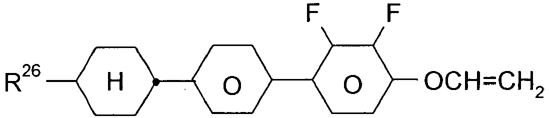 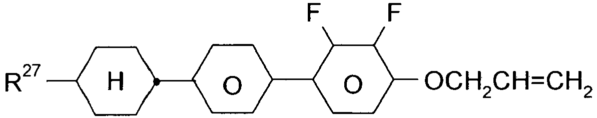 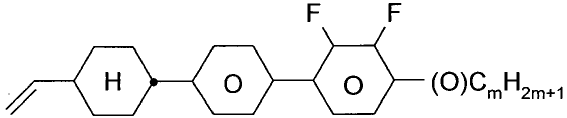 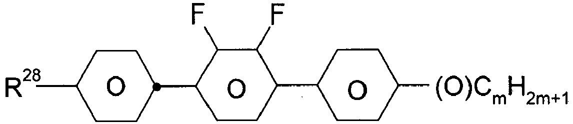 enthält,
   worin R¹³-R²⁸ jeweils unabhängig voneinander, die für R¹¹ angegebenen Bedeutungen haben, und z und m jeweils unabhängig voneinander 1-6 bedeuten. R^{E} bedeutet H, CH₃, C₂H₅ oder n-C₃H₇.
k) Flüssigkristallines Medium enthaltend zusätzlich ein oder mehrere Verbindungen der Formeln, 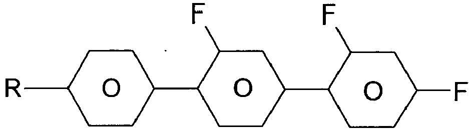 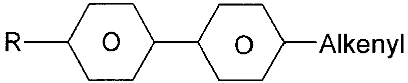 worin R Alkyl, Alkenyl, Alkoxy, Alkylalkoxy, Alkenyloxy mit 1 bzw. 2 bis 6 C-Atomen bedeutet und Alkenyl die oben angegebene
   Bedeutung hat.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach einem der Ansprüche 1 bis 6 enthält. Vorzugsweise weist die Flüssigkristallmischung einen nematischen Phasenbereich von mindestens 60 K und eine Fließviskosität ν₂₀ von maximal 30 mm². s⁻¹ bei 20 °C auf.

Die erfindungsgemäße Flüssigkristallmischung weist ein Δε von etwa -0,5 bis -8,0, insbesondere von etwa -3,0 bis -6,0 auf, wobei Δε die dielektrische Anisotropie bedeutet. Die Rotationsviskosität γ₁ ist vorzugsweise < 150 mPa·s, insbesondere < 140 mPa·s.

Die Doppelbrechung Δn in der Flüssigkristallmischung liegt, in der Regel, zwischen 0,07 und 0,16, vorzugsweise zwischen 0,08 und 0,11.

Die erfindungsgemäßen Mischungen sind für alle VA-TFT-Anwendungen geeignet, wie z.B. MVA, PVA, ASV. Weiterhin sind sie für IPS- und PALC-Anwendungen mit negativem Δε geeignet.

Die Verbindungen der Formeln I1 bis I36 können beispielsweise wie folgt hergestellt werden:

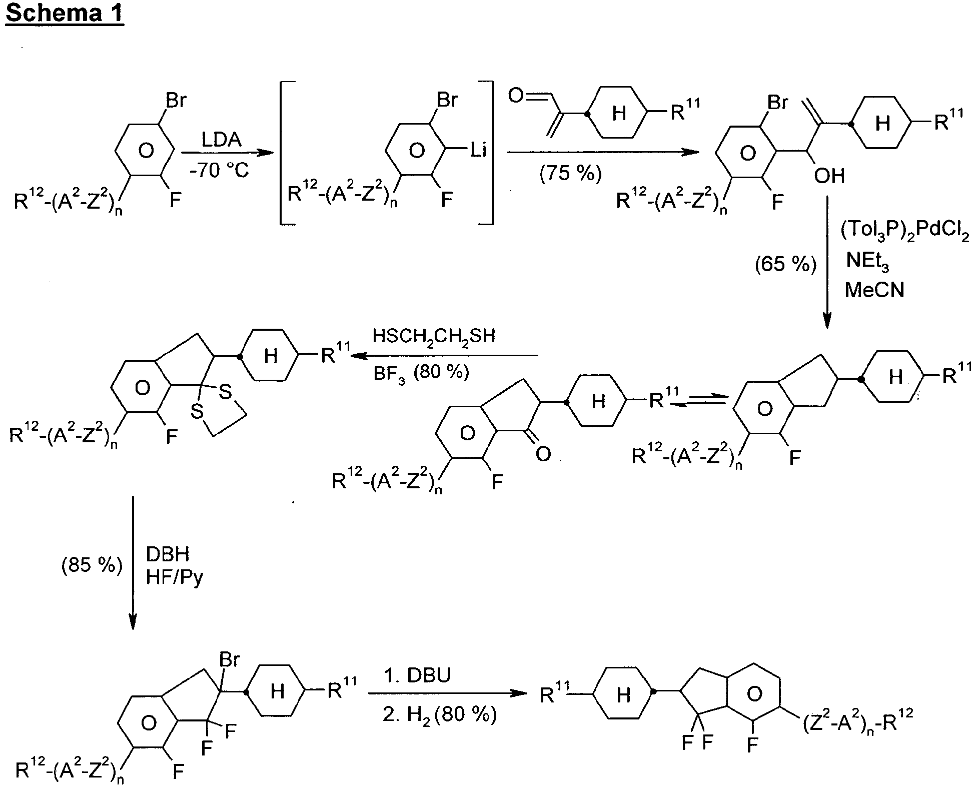

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,3. Sie enthält bevorzugt Verbindungen der Formeln Formeln 11 bis I36, IIA und/oder IIB.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm^{2.}s⁻¹, vorzugsweise nicht mehr als 25 mm^{2.} s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm^{2.}s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, Verbindungen der Formeln Formeln I1 bis I36, IIA und/oder IIB und optional III.

Neben Verbindungen der Formeln Formeln I1 bis I36,, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor, oder-CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS- oder PALC-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I1, I3, I5, I7, I9, I11, I13, I15, I17, I19, I21, I23, I25, I27, I29, I31, I33 und I35 eine oder mehrere Verbindungen der nachfolgend genannten Verbindungen.

Folgende Abkürzungen werden verwendet:
(n, m = 1-6: z = 1-6)

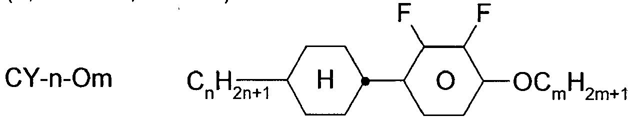

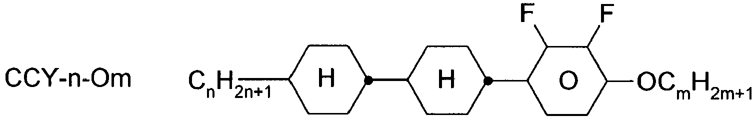

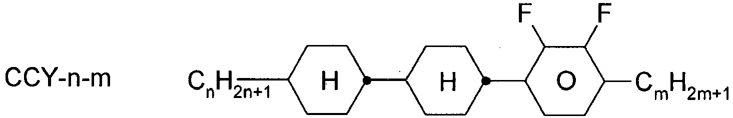

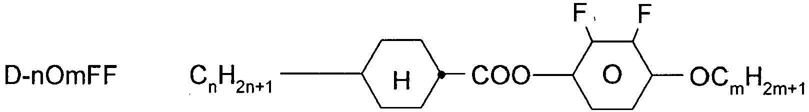

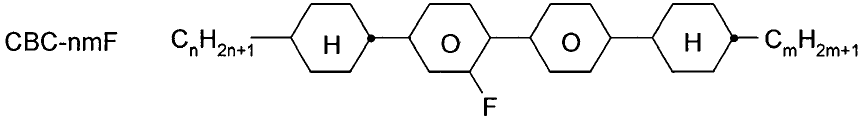

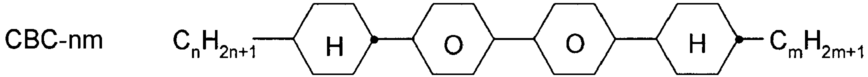

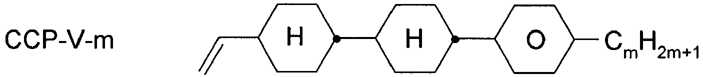

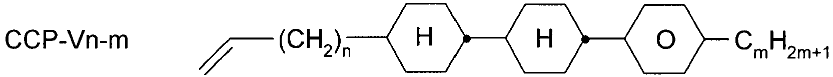

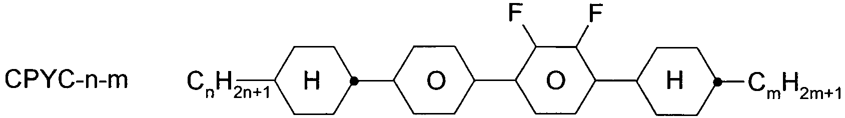

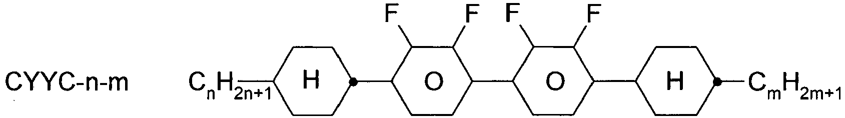

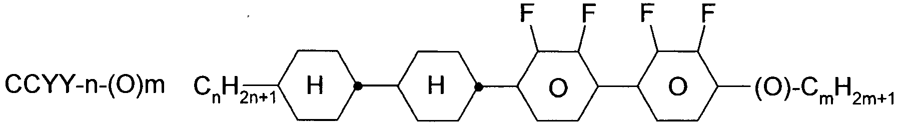

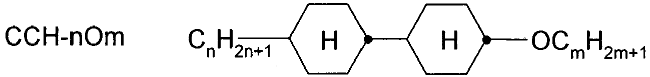

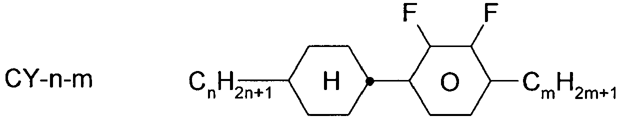

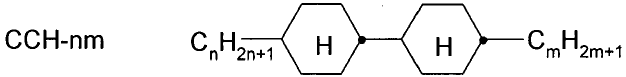

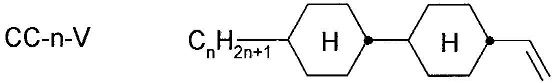

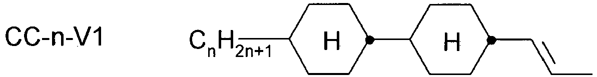

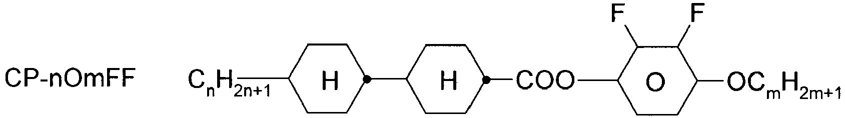

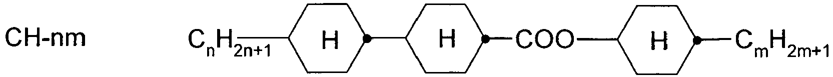

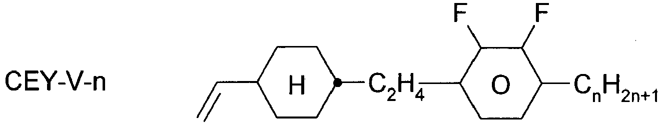

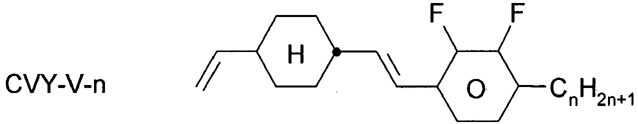

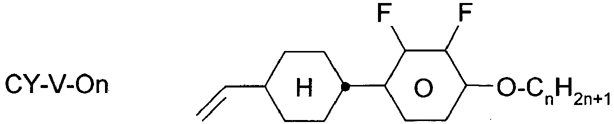

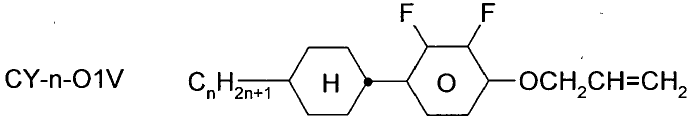

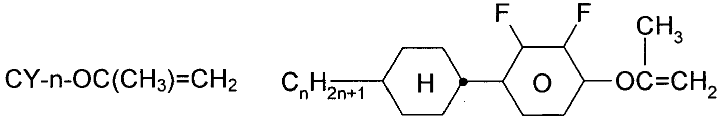

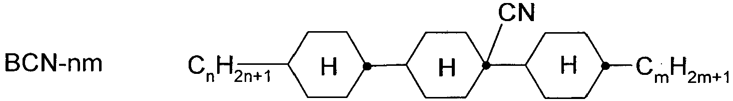

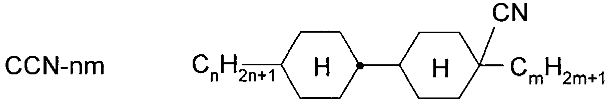

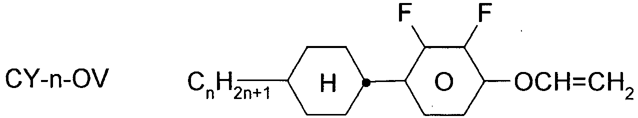

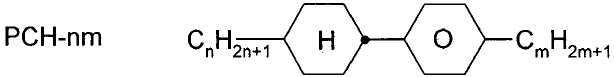

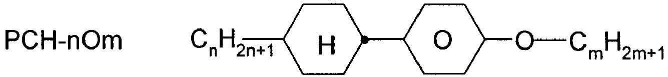

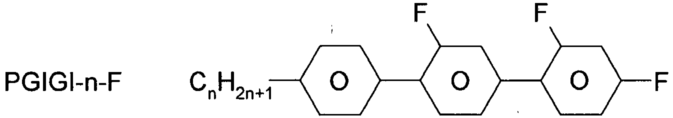

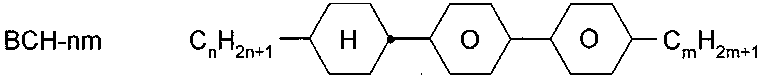

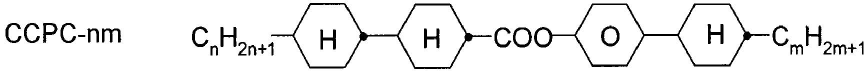

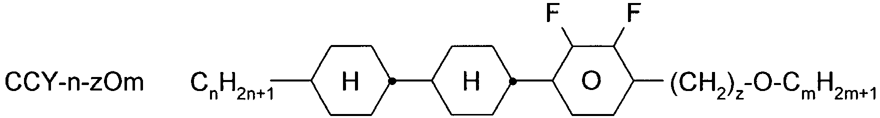

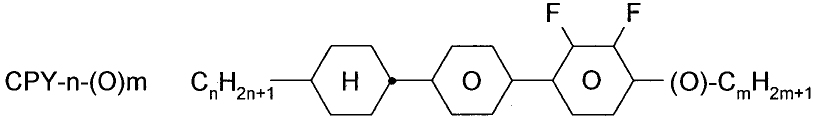

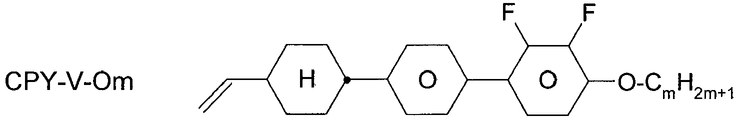

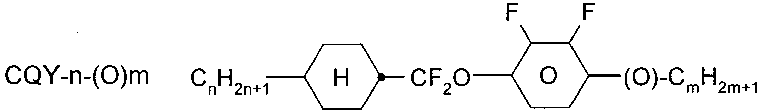

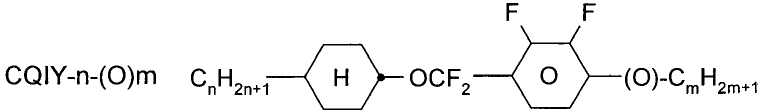

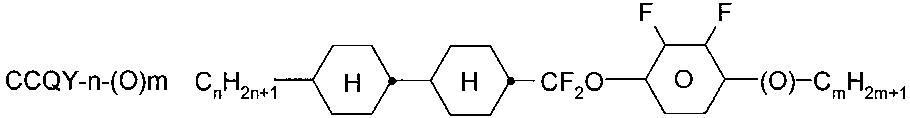

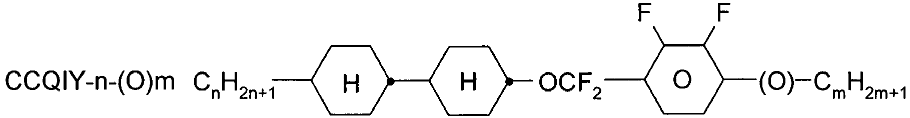

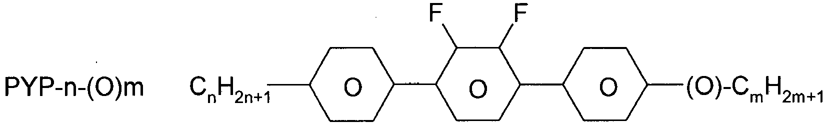

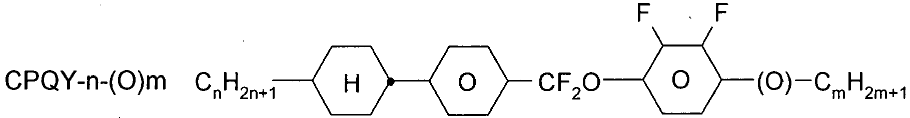

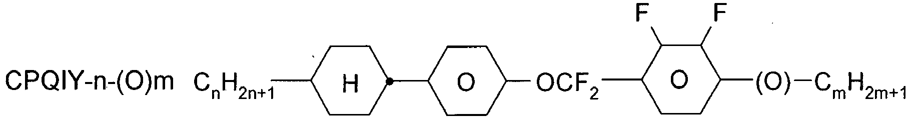

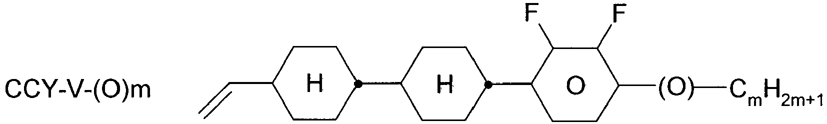

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Absorber, Antioxidantien, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

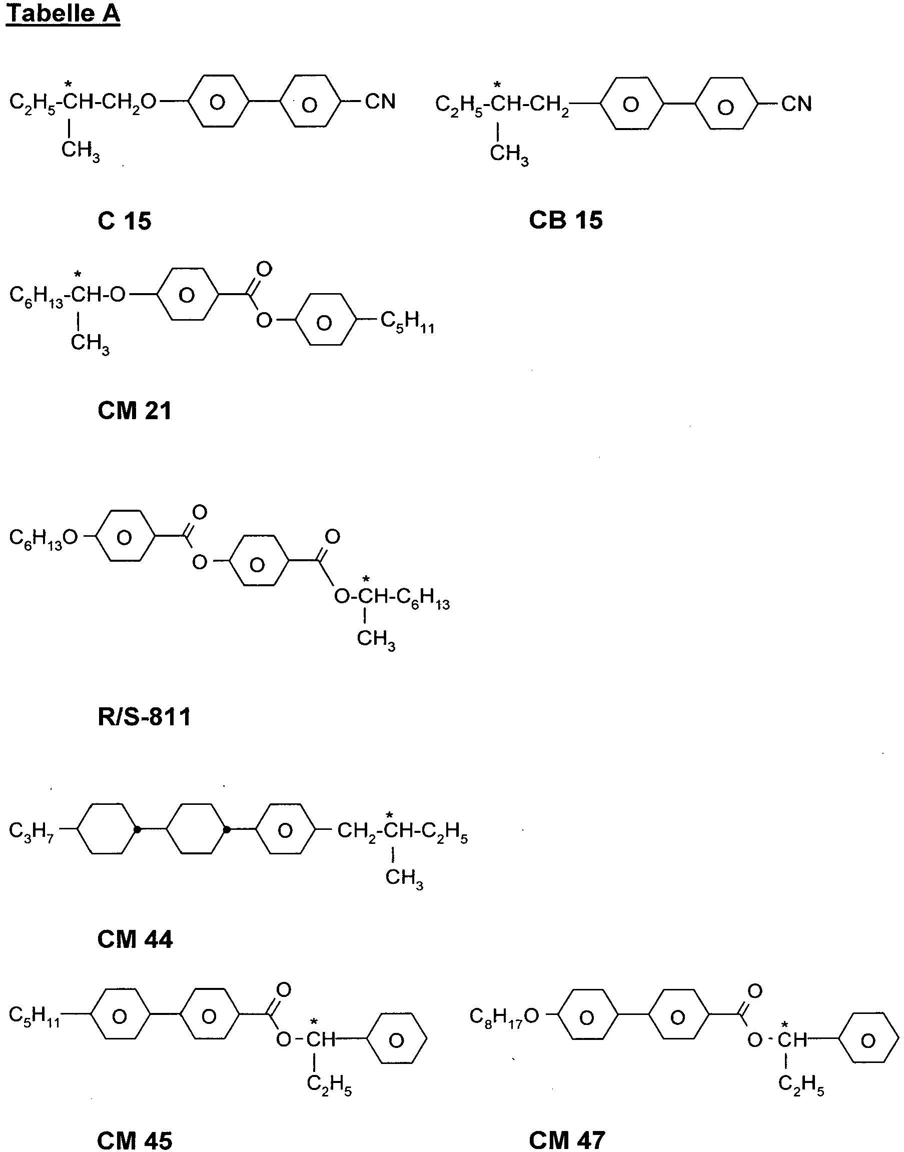

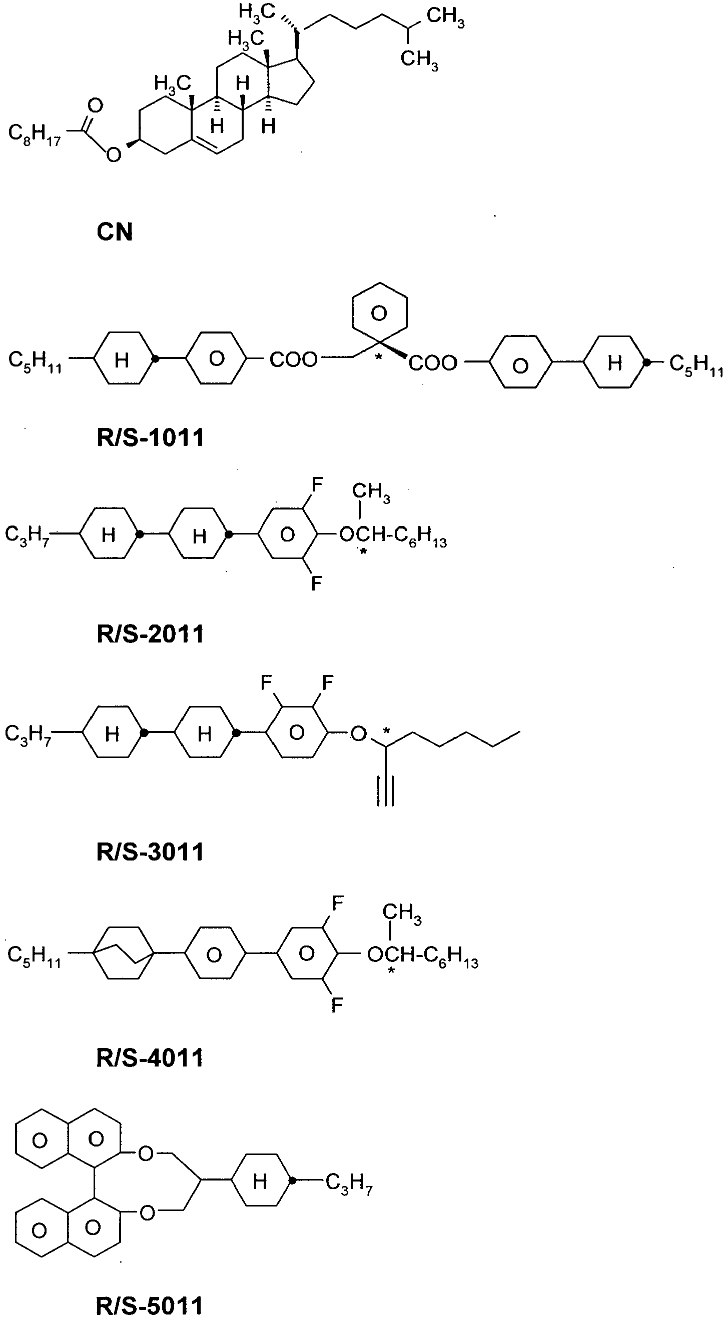

Stabilisatoren, die beispielsweise den erfindungsgemäßen Mischungen zugesetzt werden können, werden nachfolgend in Tabelle B genannt.

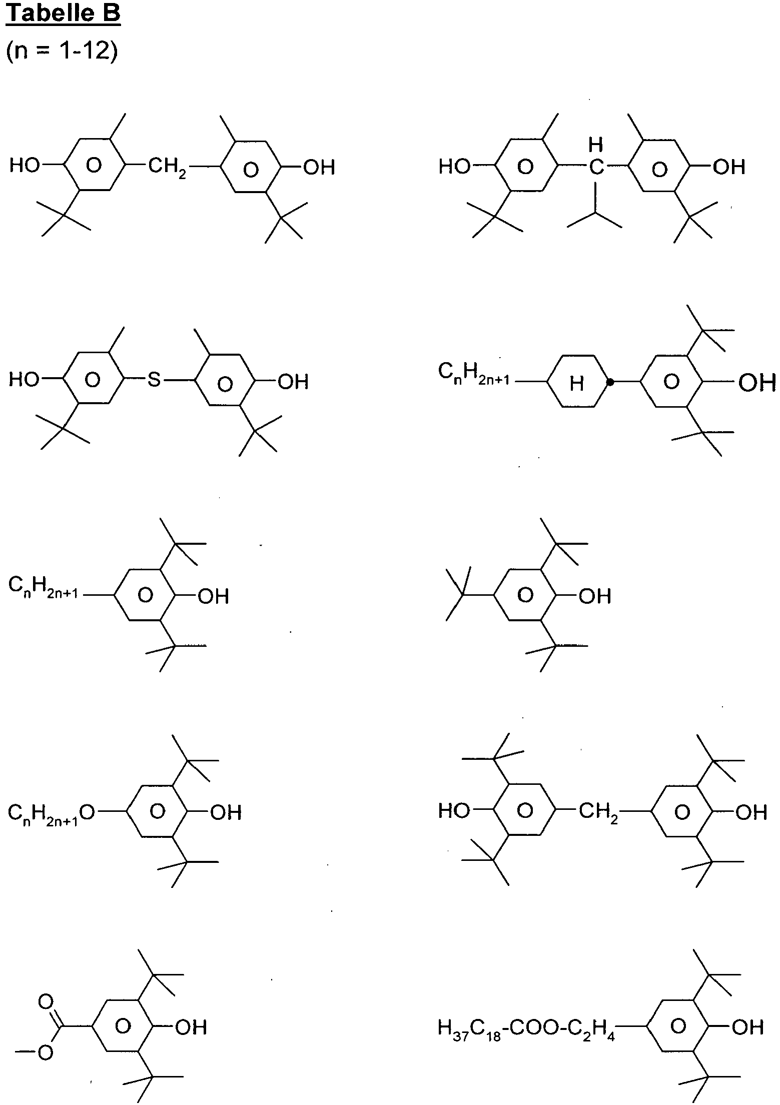

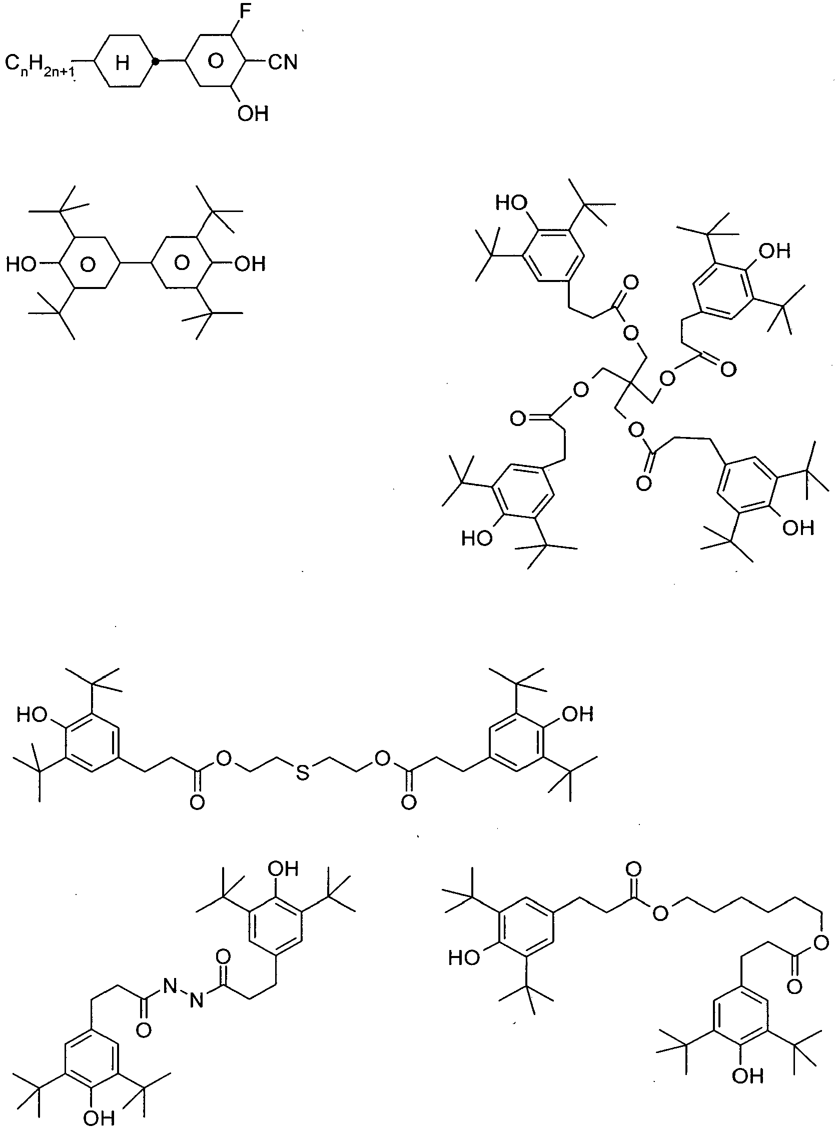

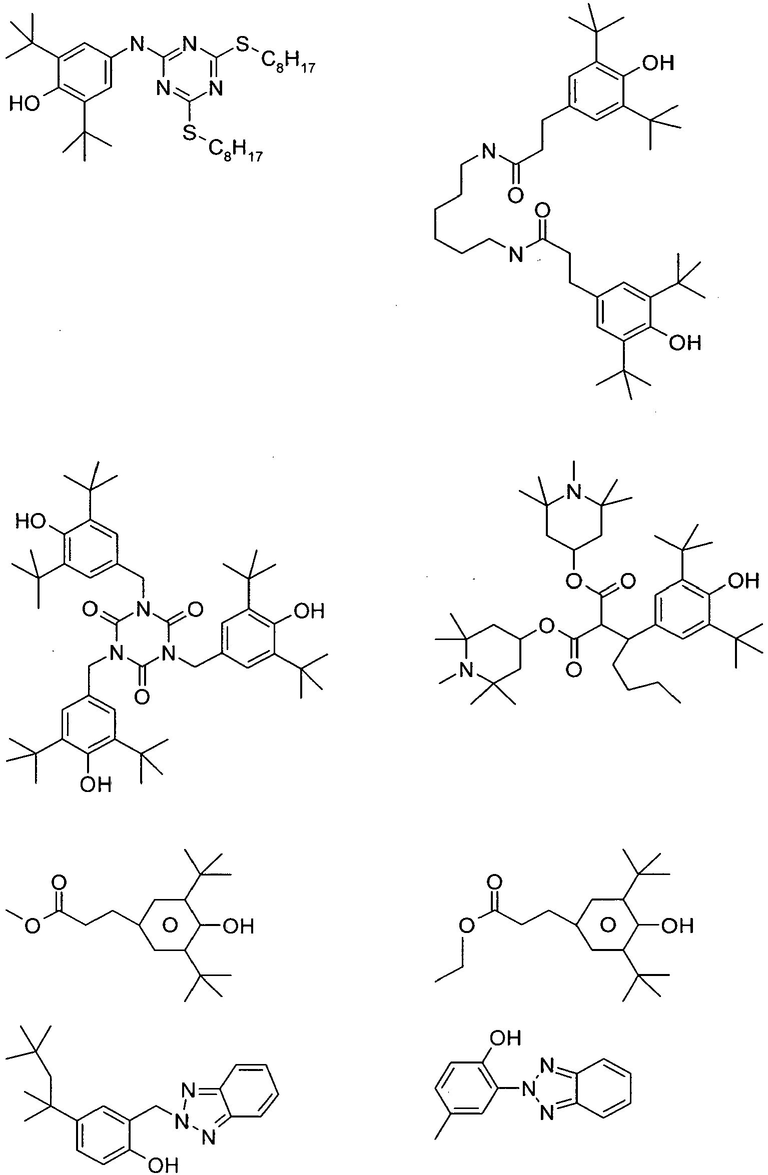

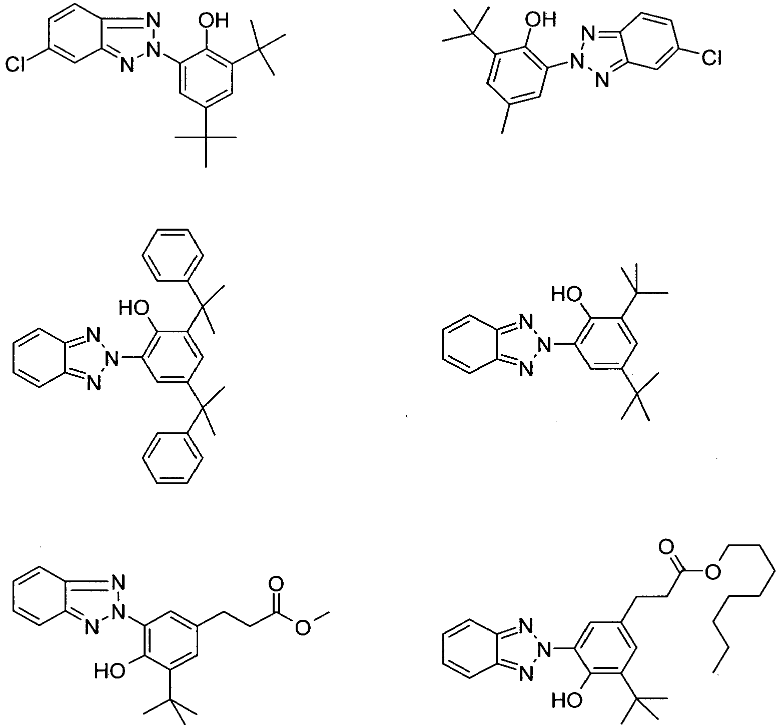

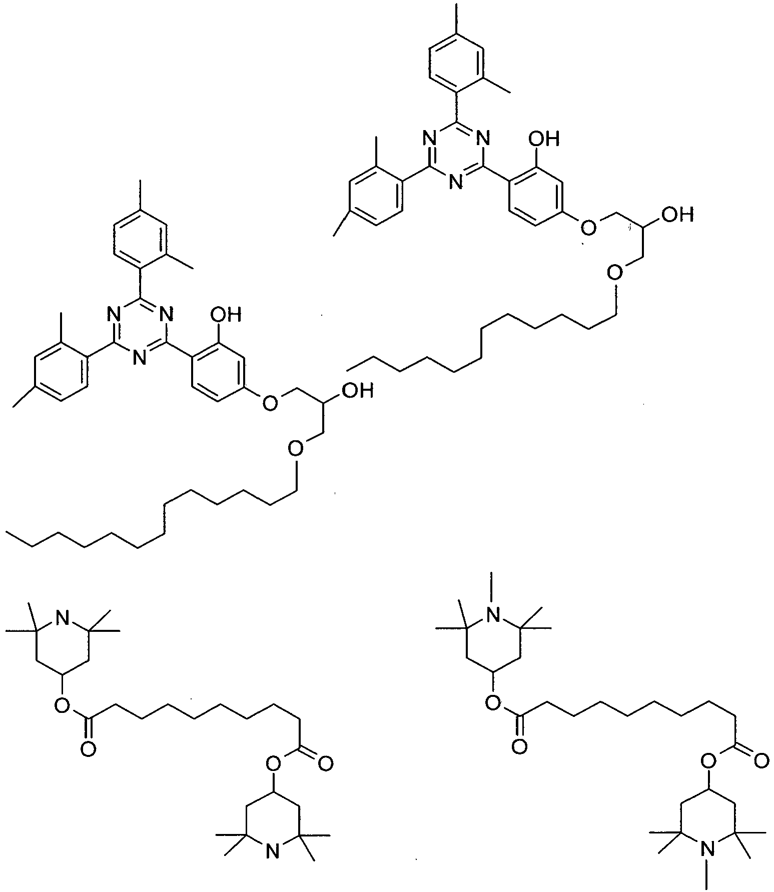

Die folgenden Beispiele sollen die Erfindung erläutern, ohne sie zu begrenzen. Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- γ₁: Rotationsviskosität gemessen bei 20 °C [mPa·s]
- LTS: Low temperature stability, bestimmt in Testzellen

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homöotrope Orientierung der Flüssigkristalle bewirken.

### Mischungsbeispiele

| Vergleichsbeispiel M0 | | | |
|---|---|---|---|
| CY-3-O2 | 19,0 % | Klärpunkt [°C]: | 74,5 |
| CY-5-O2 | 12,0 % | Δn [589 nm, 20 °C]: | +0,0815 |
| CCY-3-O3 | 7,0 % | ε_{\|\|} [1 kHz, 20 °C]: | 3,6 |
| CCY-4-O2 | 7,0 % | Δε [1 kHz, 20 °C]: | -3,6 |
| CPY-2-O2 | 7,0 % | γ1 [mPa·s, 20 °C]: | 102 |
| CC-5-V | 20,0 % | V₀[V] | 2,12 |
| CC-3-V1 | 12,0 % | LTS bei -30 °C: | nematisch > 1000 h |
| CCP-V-1 | 5,0 % | | |
| CCH-35 | 5,0 % | | |
| 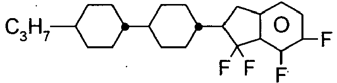 | 6,0 % | | |

| Beispiel M1 | | | |
|---|---|---|---|
| CY-3-02 | 10,00 % | Klärpunkt [°C]: | 74,0 |
| CY-5-02 | 11,00 % | Δε [589 nm, 20 °C]: | -3,6 |
| CCY-3-02 | 8,00 % | γ1 [mPa·s, 20 °C]: | 98 |
| CCY-4-02 | 7,00 % | V₀ [V] | 2,11 |
| CPY-2-02 | 7,00 % | | |
| CC-5-V | 19,00 % | | |
| CC-3-V1 | 12,00 % | | |
| CCP-V-1 | 6,00 % | | |
| CCH-35 | 6,00 % | | |
| 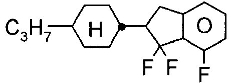 | 7,00 % | | |
| 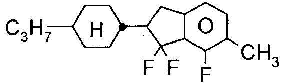 | 7,00 % | | |

| Beispiel M2 | | | |
|---|---|---|---|
| CY-3-02 | 11,00 % | Klärpunkt [°C]: | +84,5 |
| CY-5-02 | 12,00 % | Δn [589 nm, 20 °C]: | +0,0817 |
| CCY-3-02 | 8,00 % | ε_{\|\|} [1 kHz, 20 °C]: | 3,5 |
| CCY-3-03 | 12,00 % | Δε [1 kHz, 20 °C]: | -3,9 |
| CCY-4-02 | 12,00 % | γ₁ [mPa·s, 20 °C]: | 129 |
| CPY-2-02 | 3,00 % | V₀ [V] | 2,17 |
| CC-5-V | 20,00 % | | |
| CC-3-V1 | 12,00 % | | |
| CCH-35 | 4,00 % | | |
| 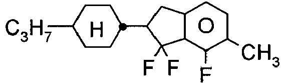 | 6,00 % | | |
| | | | |

| Vergleichsbeispiel M3 | | | |
|---|---|---|---|
| CY-3-04 | 12,00 % | Klärpunkt [°C]: | 75,0 |
| CY-5-02 | 12,00 % | Δn [589 nm, 20 °C]: | 0,0948 |
| CY-5-04 | 12,00 % | Δε [1 kHz, 20 °C]: | -4,8 |
| CCY-3-02 | 12,00 % | γ₁ [mPa·s, 20 °C]: | 178 |
| CCY-4-02 | 8,00 % | V₀ [V] | 1,84 |
| CPY-2-02 | 5,00 % | | |
| CPY-3-02 | 6,00 % | | |
| CC-5-V | 10,00 % | | |
| CC-3-V1 | 6,00 % | | |
| BCH-32 | 8,00 % | | |
| 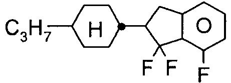 | 9,00 % | | |

| Beispiel M4 | | | |
|---|---|---|---|
| CY-3-04 | 16,00 % | Klärpunkt [°C]: | 74,0 |
| CY-5-02 | 6,00 % | Δn [589 nm, 20 °C]: | 0,0960 |
| CY-5-04 | 10,00 % | Δε [1 kHz, 20 °C]: | -4,8 |
| 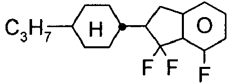 | 8,00 % | γ₁ [mPa·s, 20 °C]: | 171 |
| | | V₀ [V]: | 1,85 |
| 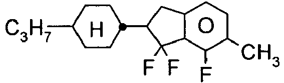 | 8,00 % | | |
| CCY-3-02 | 9,00 % | | |
| CPY-3-02 | 7,00 % | | |
| CCY-2-1 | 8,00 % | | |
| CCY-3-1 | 7,00 % | | |
| CC-3-V1 | 13,00 % | | |
| BCH-32 | 8,00 % | | |
| | | | |

| Beispiel M5 | | | |
|---|---|---|---|
| CY-5-O2 | 6,00 % | Klärpunkt [°C]: | 84,5 |
| CCY-3-O3 | 12,00 % | Δn [589 nm, 20 °C]: | 0,0852 |
| CCY-4-O2 | 11,00 % | ε_{\|\|} [1 kHz, 20 °C]: | 3,4 |
| CPY-2-O2 | 10,00 % | Δε [1 kHz, 20 °C]: | -3,1 |
| CPY-3-O2 | 5,00 % | γ₁ [mPa·s, 20 °C]: | 110 |
| CC-4-V | 20,00 % | V₀ [V]: | 2,28 |
| CC-3-V1 | 9,00 % | | |
| CCH-34 | 3,00 % | | |
| PCH-301 | 4,00 % | | |
| CCH-301 | 8,00 % | | |
| 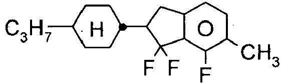 | 12,00 % | | |

| Beispiel M6 | | | |
|---|---|---|---|
| CY-3-O2 | 14,00 % | Klärpunkt [°C]: | 85,0 |
| CY-5-O2 | 6,00 % | Δn [589 nm, 20 °C]: | 0,0850 |
| CCY-3-O2 | 7,00 % | ε_{\|\|} [1 kHz, 20 °C]: | 3,6 |
| CCY-3-O3 | 12,00 % | Δε [1 kHz, 20 °C]: | -4,2 |
| CCY-4-O2 | 12,00 % | γ₁ [mPa·s, 20 °C]: | 142 |
| CPY-2-O2 | 5,00 % | V₀ [V]: | 2,08 |
| CC-5-V | 20,00 % | | |
| CC-3-V1 | 8,00 % | | |
| CCH-35 | 6,00 % | | |
| 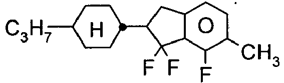 | 10,00 % | | |
| | | | |

| Vergleichsbeispiel M7 | | | |
|---|---|---|---|
| CY-3-O2 | 5,00 % | Klärpunkt [°C]: | 83,0 |
| CCY-3-O2 | 3,00 % | Δn [589 nm, 20 °C]: | 0,0837 |
| CCY-3-O3 | 12,00 % | ε_{\|\|} [1 kHz, 20°C]: | 3,5 |
| CCY-4-O2 | 10,00 % | Δε [1 kHz, 20 °C]: | -3,8 |
| CPY-2-O2 | 11,00 % | γ₁ [mPa·s, 20 °C]: | 140 |
| CC-5-V | 20,00 % | V₀[V]: | 2,03 |
| CC-3-V1 | 12,00 % | | |
| CCH-35 | 5,00 % | | |
| 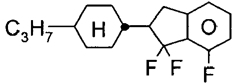 | 5,00 % | | |
| 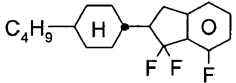 | 12,00 % | | |
| 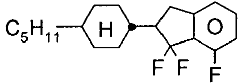 | 5,00 % | | |

## Patentansprüche

1. Flüssigkristallines Medium auf der Basis eines Gemisches von polaren Verbindungen mit negativer dielektrischer Anisotropie, **dadurch gekennzeichnet, dass** es mindestens eine Verbindung ausgewählt aus den Formeln I1, I3, I5, I7, I9, I11, I13, I15, I17, I19, I21, I23, I25, I27, I29, I31, I33 und I35, 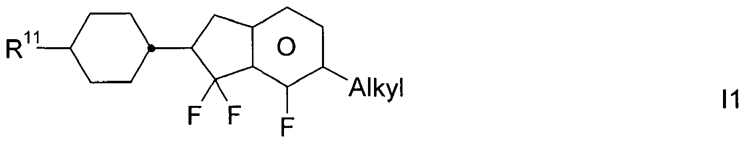 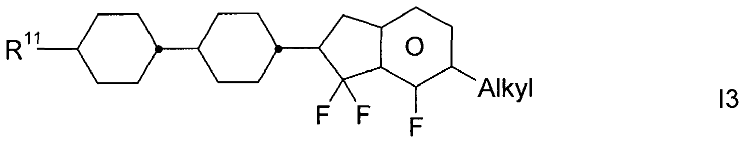 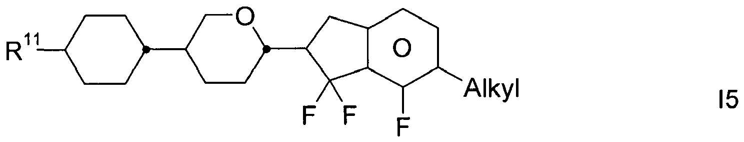 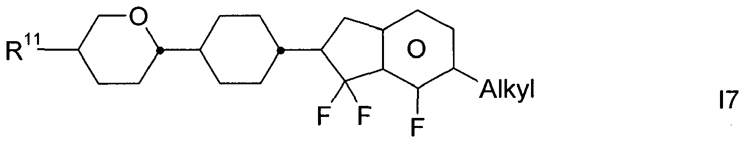 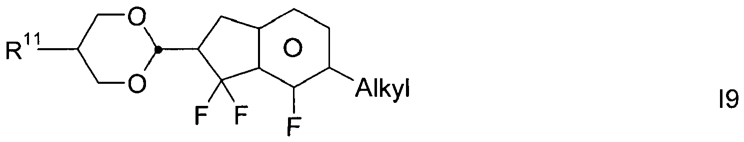 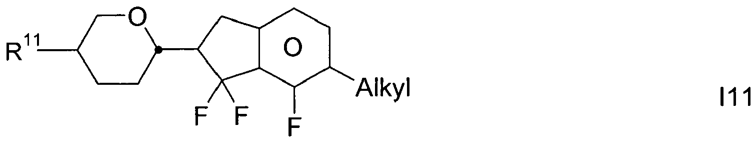 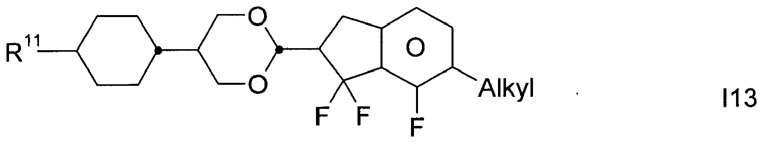 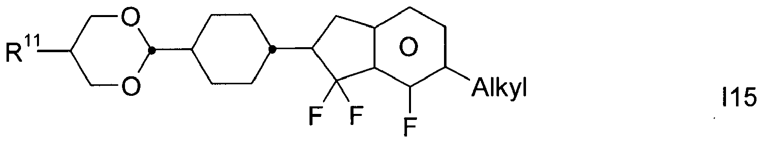 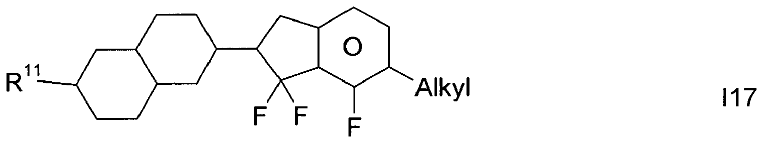 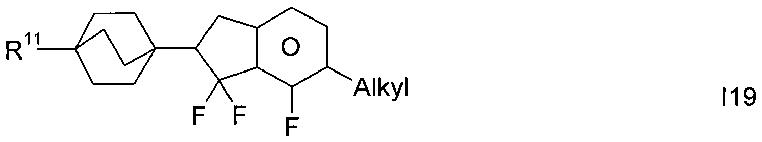 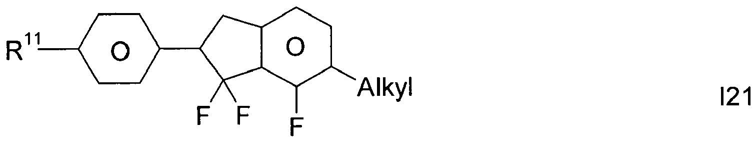 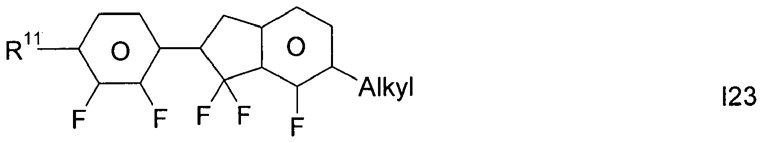 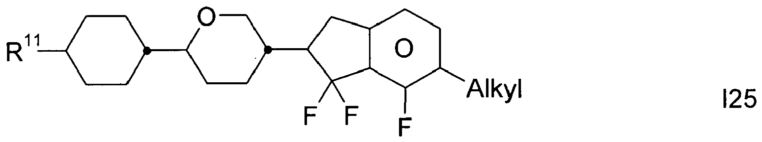 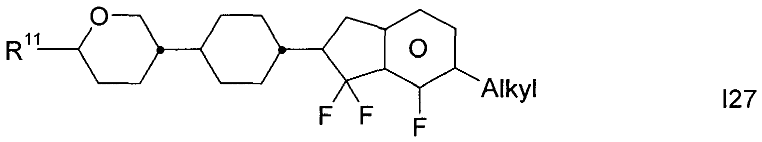 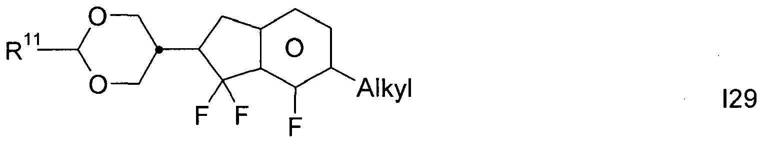 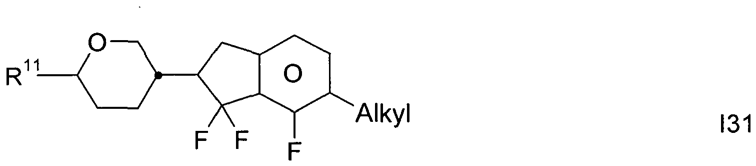 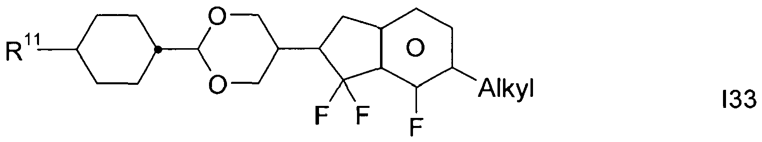 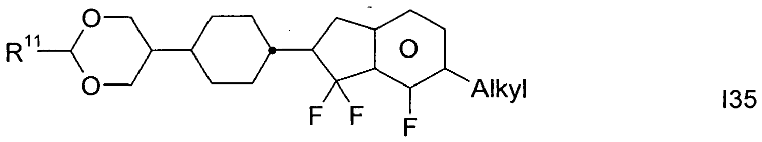 worin
R¹¹ H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 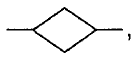 -C≡C-, -OC-O-, oder -O-CO- so ersetzt sein können, dass O-Atome nicht direkt miteinander verknüpft sind,
und
Alkyl einen geradkettigen Alkylrest mit 1-6 C-Atomen,
bedeuten,
enthält.

2. Flüssigkristallines Medium nach Anspruch 1, **dadurch gekennzeichnet, dass** es zusätzlich eine oder mehrere Verbindungen der Formeln IIA und/oder IIB: 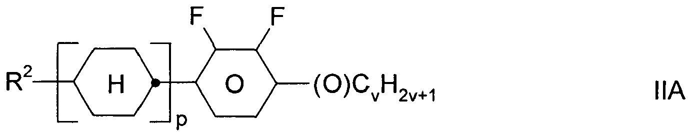 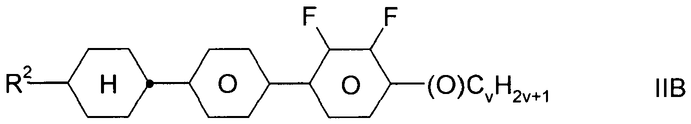 worin
R² einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 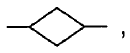 -C≡C-, -CO-, -CO-O-, -O-CO- oder -O-CO-O- so ersetzt sein können, dass O-Atome nicht direkt miteinander verknüpft sind,
p 1 oder 2, und
v 1 bis 6
bedeutet,
enthält.

3. Flüssigkristallines Medium nach Anspruch 1 oder 2, **dadurch gekennzeichnet, dass** es zusätzlich eine oder mehrere Verbindungen der Formel III, 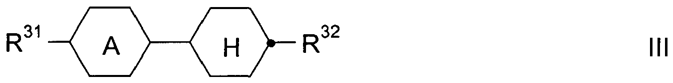 worin
R³¹ und R³² jeweils unabhängig voneinander einen geradkettigen Alkyl-, Alkenyl-, Alkylalkoxy- oder Alkoxyrest mit bis zu 12 C-Atomen bedeuten, und 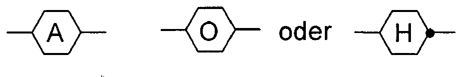 bedeuten, enthält.

4. Flüssigkristallines Medium nach einem oder mehreren der Ansprüche 1 bis 3, **dadurch gekennzeichnet, dass** der Anteil an Verbindungen der Formeln IIA und/oder IIB im Gesamtgemisch mindestens 20 Gew.-% beträgt.

5. Flüssigkristallines Medium nach einem oder mehreren der Ansprüche 1 bis 4, **dadurch gekennzeichnet, dass** der Anteil an Verbindungen der Formel III im Gesamtgemisch mindestens 5 Gew.-% beträgt.

6. Flüssigkristallines Medium nach einem oder mehreren der Ansprüche 1 bis 5, **dadurch gekennzeichnet, dass** es mindestens eine Verbindung ausgewählt aus den Formeln 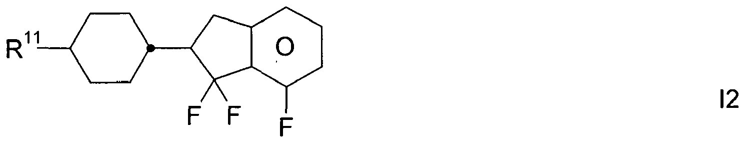 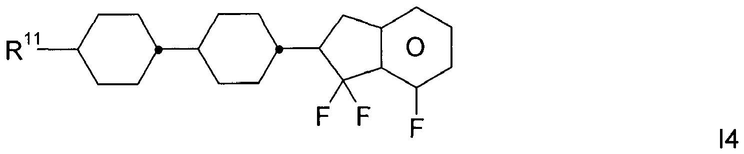 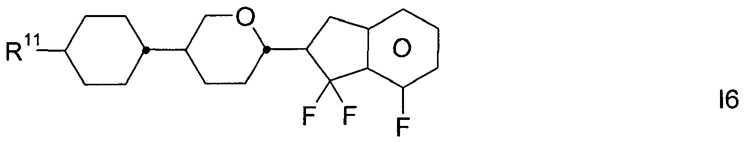 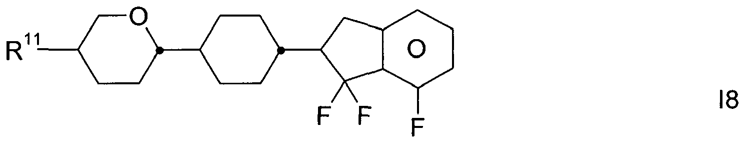 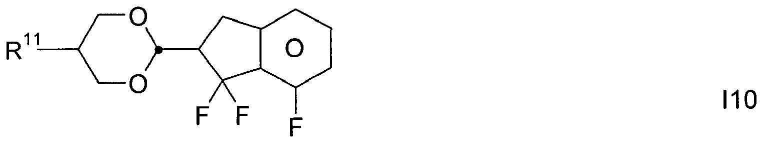 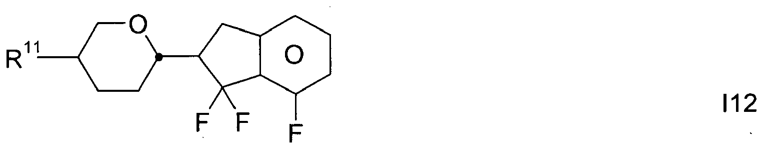 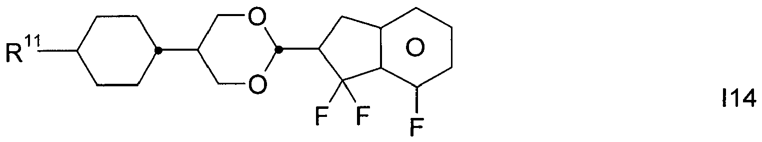 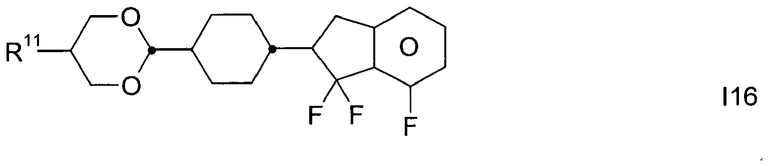 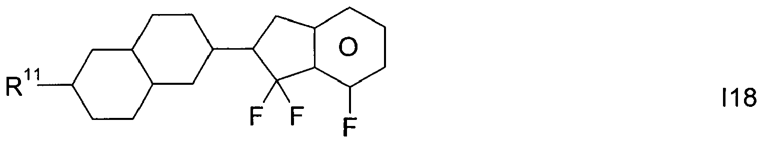 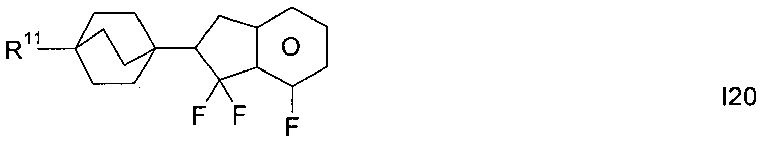 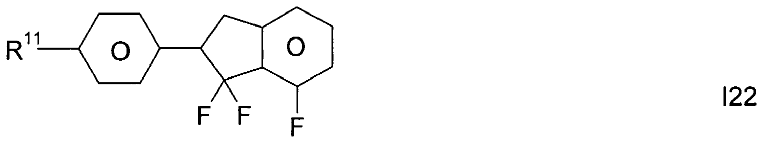 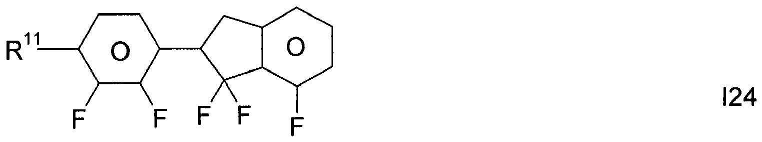 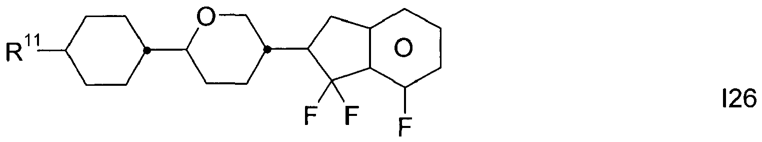 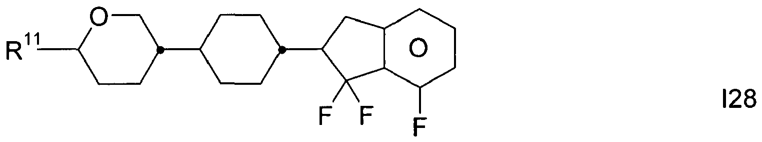 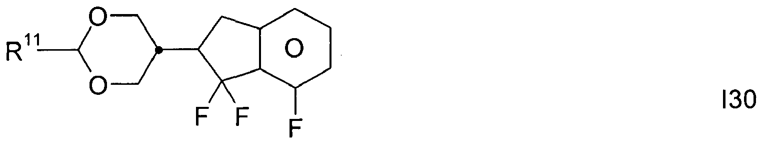 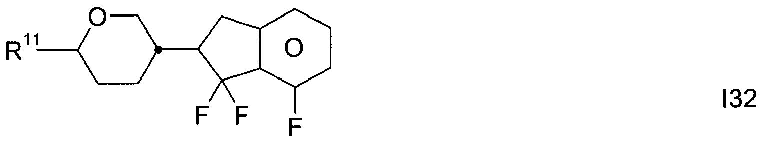 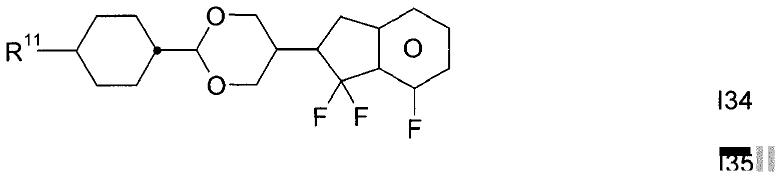 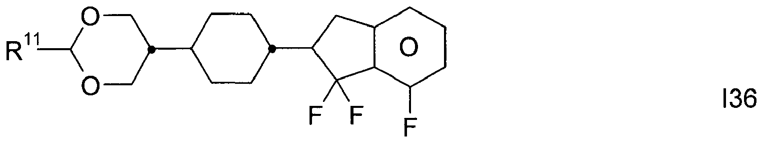 worin
R¹¹ die in Anspruch 1 angegebenen Bedeutungen hat, enthält.

7. Elektrooptische Anzeige mit einer Aktivmatrix-Addressierung basierend auf dem ECB- (electrically controlled birefringence), PALC-(plasma addressed liquid crystal) oder dem IPS- (in plane switching) Effekt, **dadurch gekennzeichnet, dass** sie als Dielektrikum ein flüssigkristallines Medium nach einem oder mehreren der Ansprüche 1 bis 6 enthält.

## Claims

1. Liquid-crystalline medium based on a mixture of polar compounds having negative dielectric anisotropy, **characterised in that** it comprises at least one compound selected from the formulae I1, I3, I5, I7, I9, I11, I13, I15, I17, I19, I21, I23, I25, I27, I29, I31, I33 and I35, 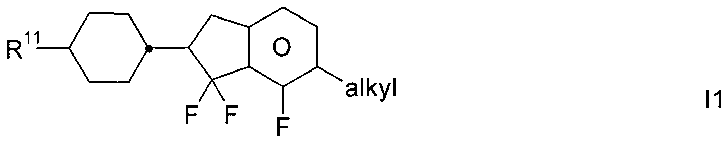 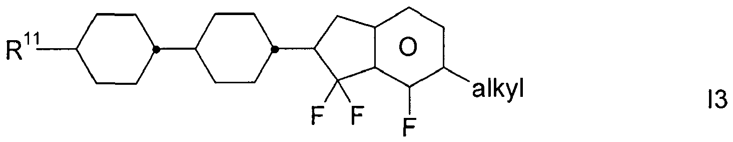 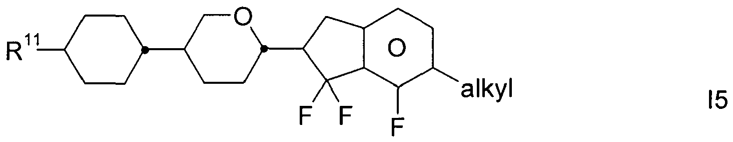 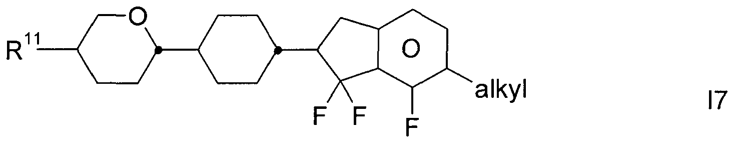 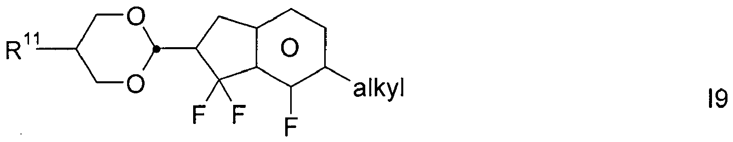 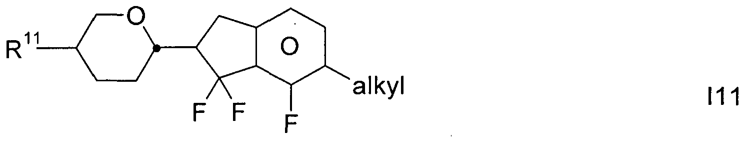 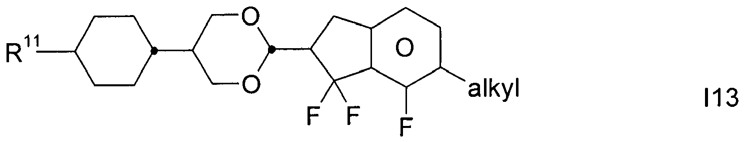 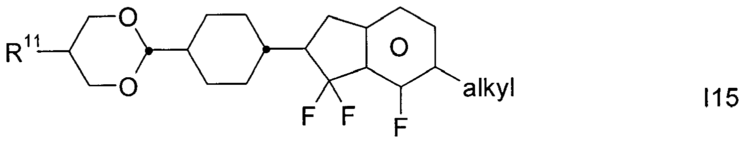 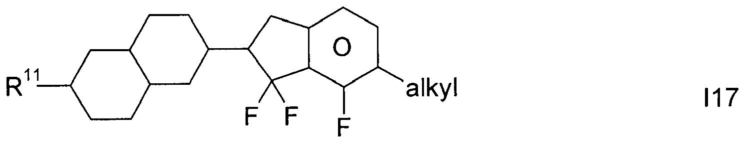 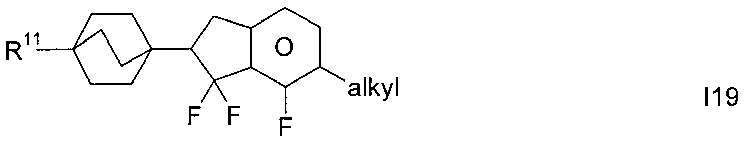 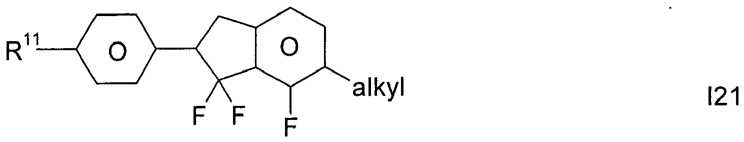 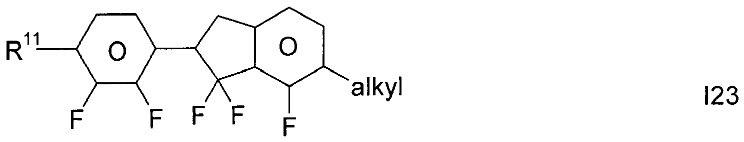 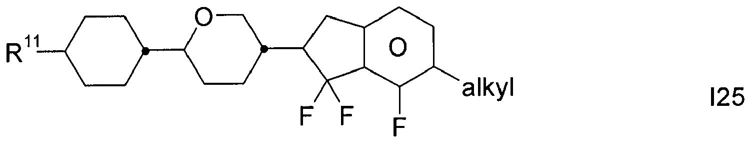 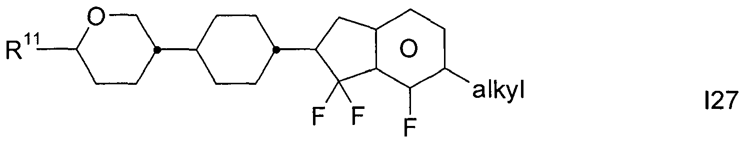 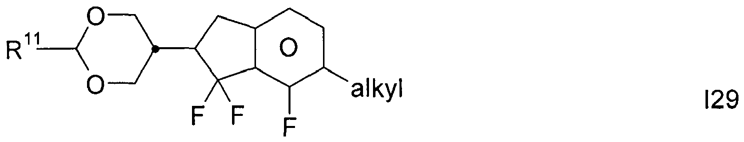 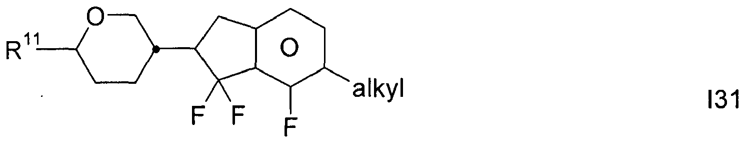 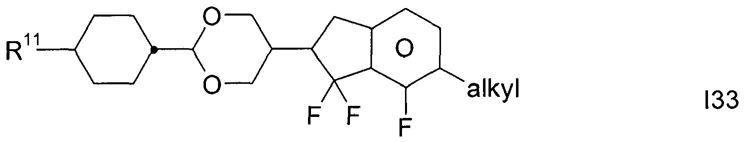 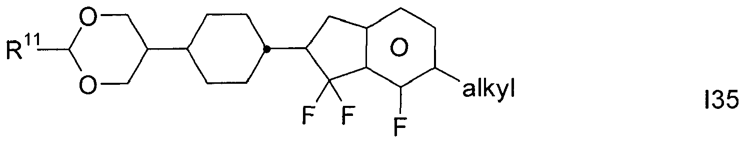 in which
R¹¹ denotes H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 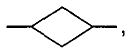 -C≡C-, -OC-O- or -O-CO- in such a way that O atoms are not linked directly to one another, and
alkyl denotes a straight-chain alkyl radical having 1-6 C atoms.

2. Liquid-crystalline medium according to Claim 1, **characterised in that** it additionally comprises one or more compounds of the formulae IIA and/or IIB, 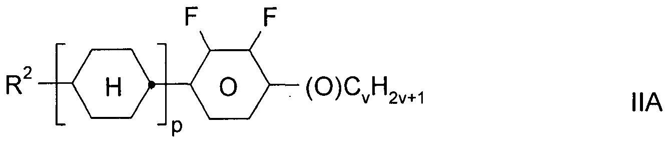 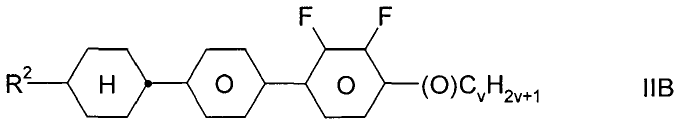 in which
R² denotes an alkyl or alkenyl radical having up to 15 C atoms which is unsubstituted, monosubstituted by CN or CF₃ or at least monosubstituted by halogen, where, in addition, one or more CH₂ groups in these radicals may each be replaced, independently of one another, by -O-, -S-, 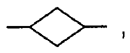 -C≡C-, -CO-, -CO-O-, -O-CO- or -O-CO-O- in such a way that O atoms are not linked directly to one another,
p denotes 1 or 2, and
v denotes 1 to 6.

3. Liquid-crystalline medium according to Claim 1 or 2, **characterised in that** it additionally comprises one or more compounds of the formula III, 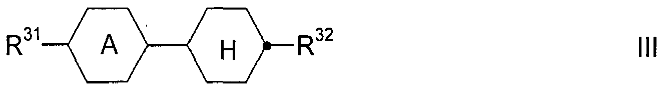 in which
R³¹ and R³² each, independently of one another, denote a straight-chain alkyl, alkenyl, alkylalkoxy or alkoxy radical having up to 12 C atoms, and

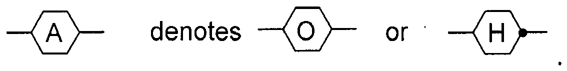

4. Liquid-crystalline medium according to one or more of Claims 1 to 3, **characterised in that** the proportion of compounds of the formulae IIA and/or IIB in the mixture as a whole is at least 20% by weight.

5. Liquid-crystalline medium according to one or more of Claims 1 to 4, **characterised in that** the proportion of compounds of the formula III in the mixture as a whole is at least 5% by weight.

6. Liquid-crystalline medium according to one or more of Claims 1 to 5, **characterised in that** it comprises at least one compound selected from the formulae 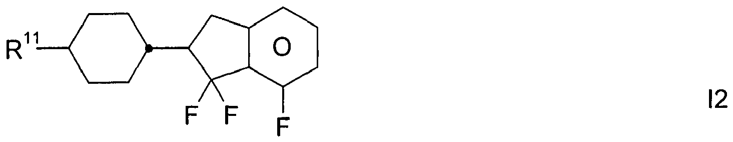 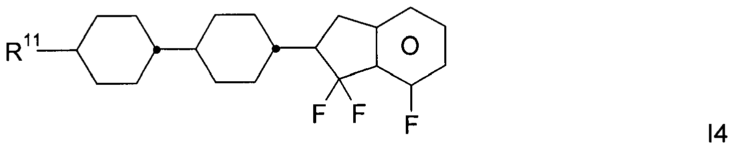 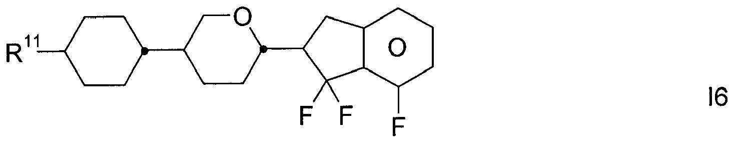 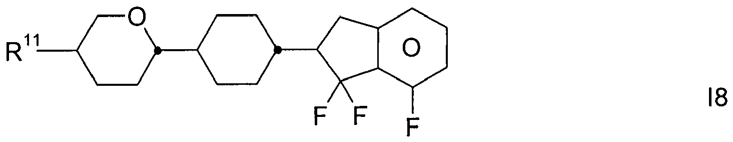 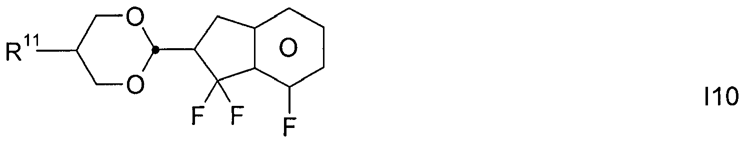 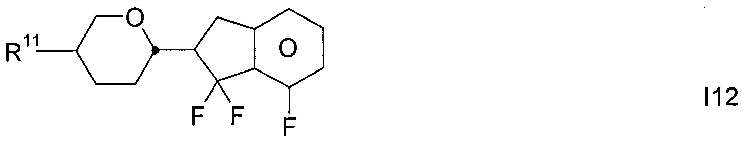 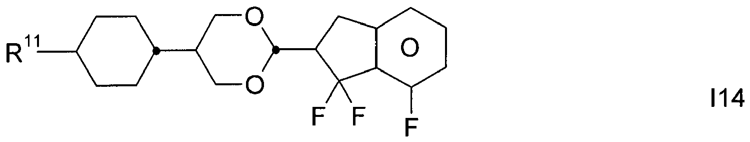 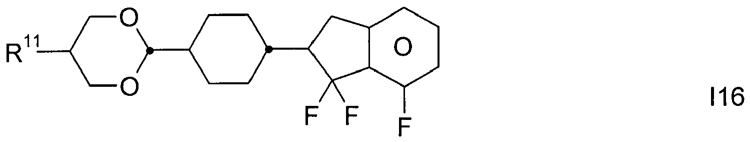 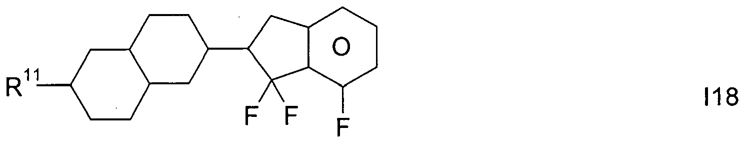 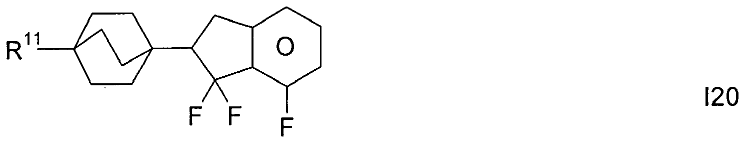 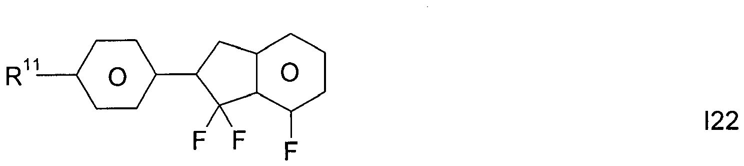 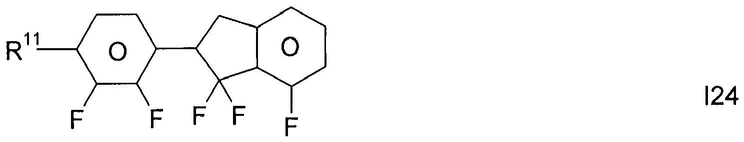 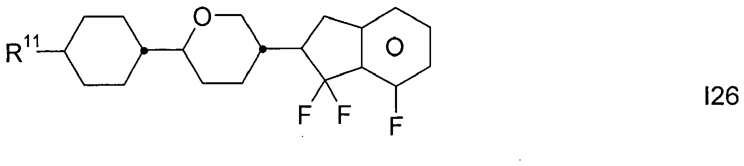 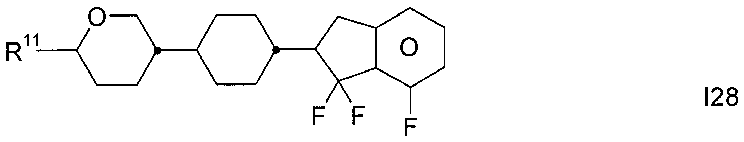 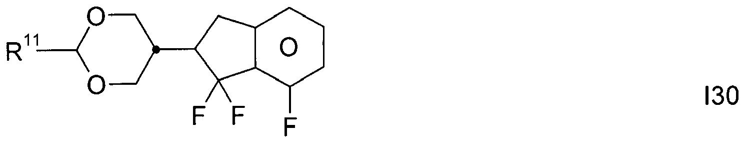 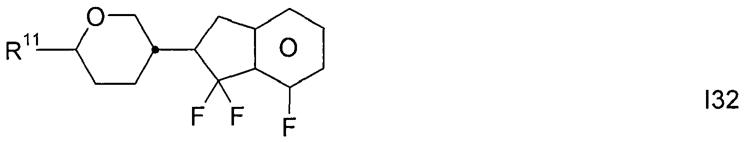 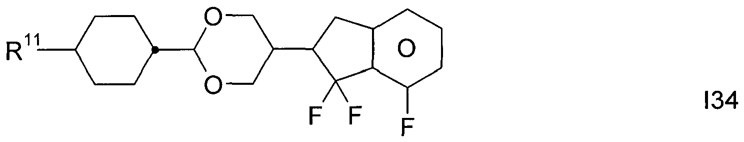 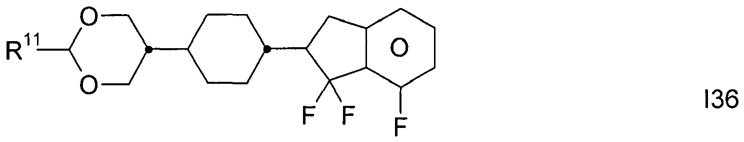 in which
R¹¹ has the meanings indicated in Claim 1.

7. Electro-optical display having active-matrix addressing based on the ECB (electrically controlled birefringence), PALC (plasma addressed liquid crystal) or IPS (in plane switching) effect, **characterised in that** it contains, as dielectric, a liquid-crystalline medium according to one or more of Claims 1 to 6.

## Revendications

1. Milieu cristallin liquide basé sur un mélange de composés polaires présentant une anisotropie diélectrique négative, **caractérisé en ce qu'**il comprend au moins un composé choisi parmi les formules I1, I3, I5, I7, I9, I11, I13, I15, I17, I19, I21, I23, I25, I27, I29, I31, I33 et I35 : 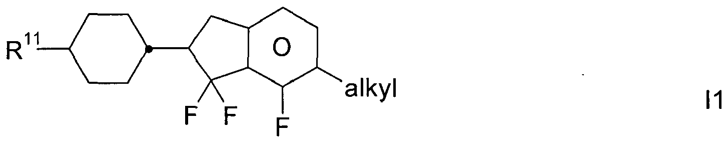 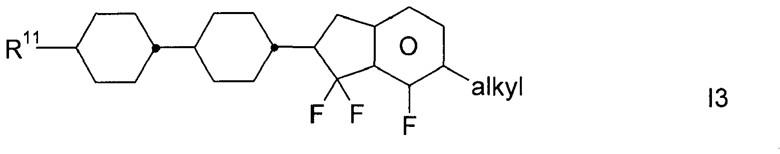 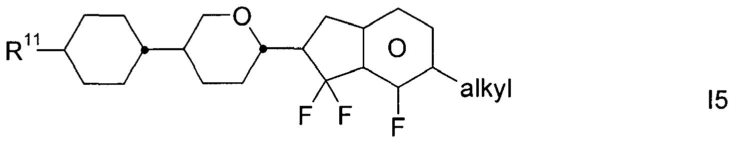 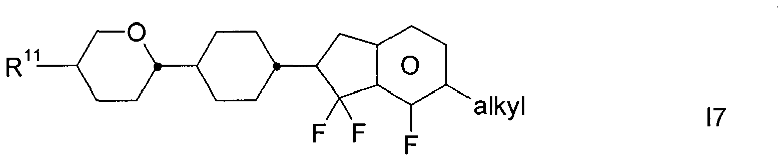 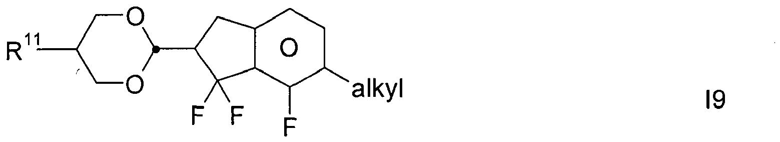 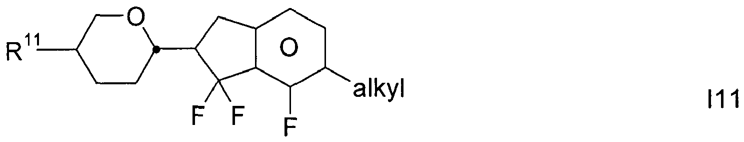 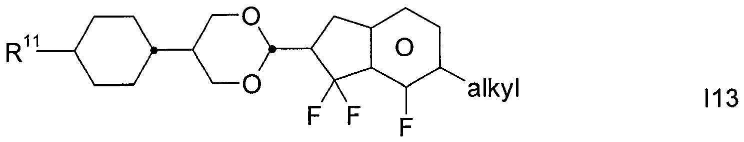 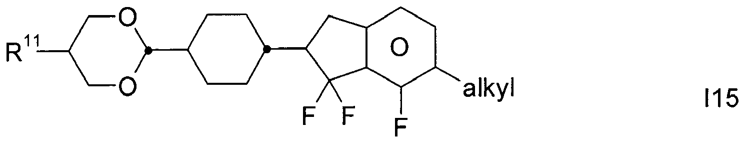 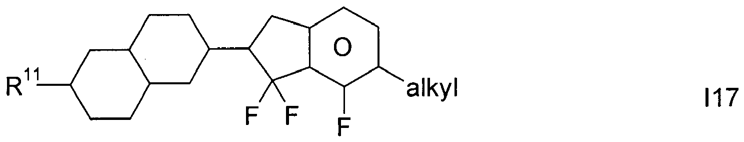 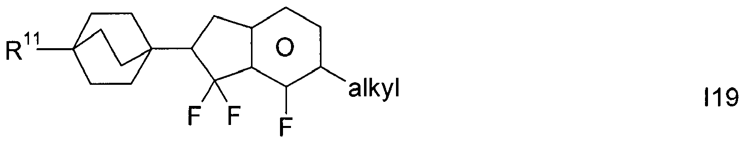 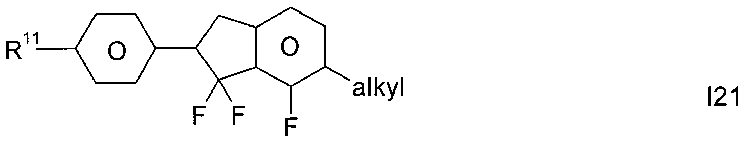 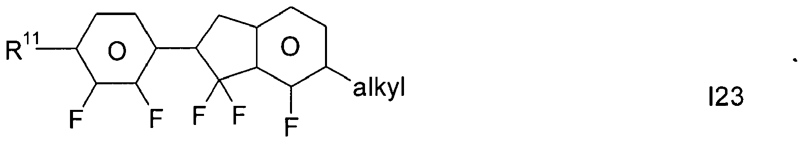 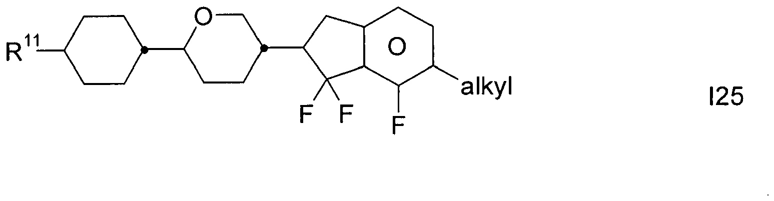 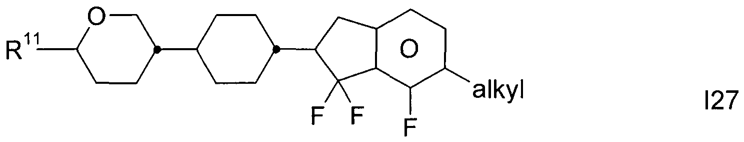 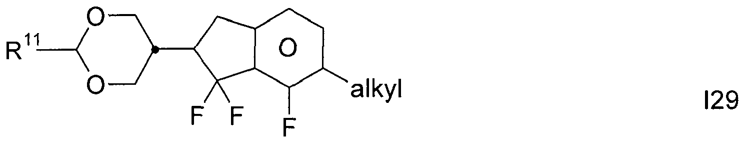 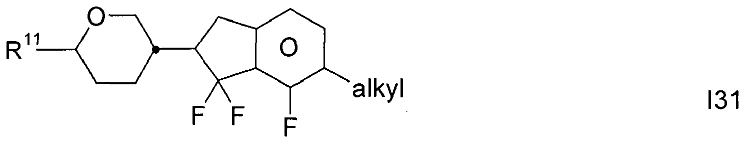 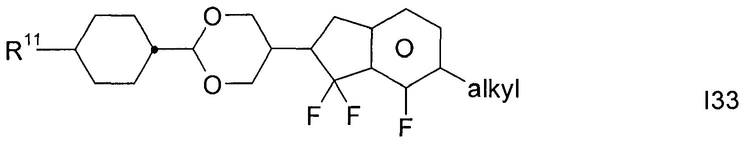 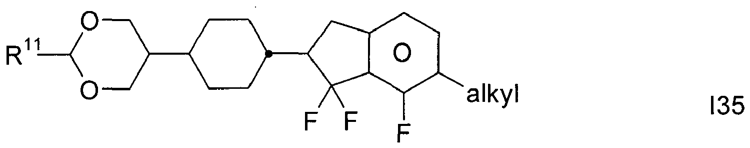 dans lesquelles :
R¹¹ représente H, un radical alkyle ou alkényle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/peuvent être remplacé(s) par -O-, -S-, 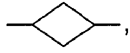 -C≡C-, -OC-O- ou -O-CO- de telle sorte que des atomes de O ne soient pas liés directement les uns aux autres, et
alkyl représente un radical alkyle en chaîne droite comportant 1-6 atome(s) de C.

2. Milieu cristallin liquide selon la revendication 1, **caractérisé en ce qu'**il comprend de façon additionnelle un ou plusieurs composés des formules IIA et/ou IIB : 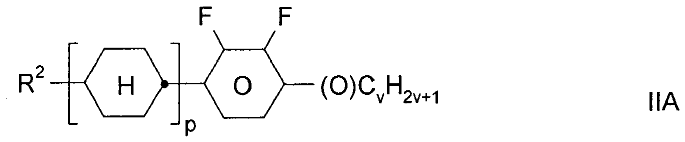 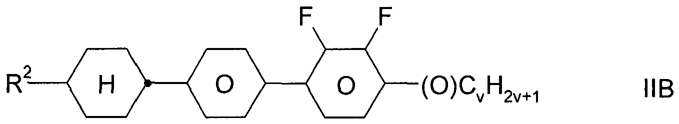 dans lesquelles :
R² représente un radical alkyle ou alkényle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/ peuvent chacun être remplacé(s), indépendamment les uns des autres, par -O-, -S-, 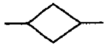 -C≡C-, -CO-, -CO-O-, -O-CO- ou -O-CO-O- de telle sorte que des atomes de O ne soient pas liés directement les uns aux autres,
p représente 1 ou 2, et
v représente 1 à 6.

3. Milieu cristallin liquide selon la revendication 1 ou 2, **caractérisé en ce qu'**il comprend de façon additionnelle un ou plusieurs composé(s) de la formule III : 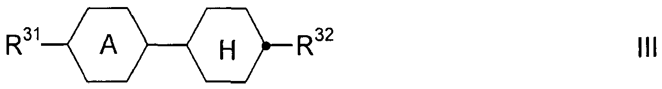 dans laquelle :
R³¹ et R³² représentent, chacun indépendamment de l'autre, un radical alkyle, alkényle, alkylalcoxy ou alcoxy en chaîne droite comportant jusqu'à 12 atomes de C, et

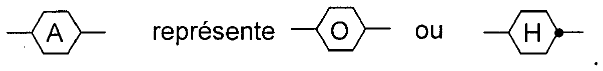

4. Milieu cristallin liquide selon une ou plusieurs des revendications 1 à 3, **caractérisé en ce que** la proportion de composés des formules IIA et/ou IIB dans le mélange pris dans sa globalité est d'au moins 20% en poids.

5. Milieu cristallin liquide selon une ou plusieurs des revendications 1 à 4, **caractérisé en ce que** la proportion de composés de la formule III dans le mélange pris dans sa globalité est d'au moins 5% en poids.

6. Milieu cristallin liquide selon une ou plusieurs des revendications 1 à 5, **caractérisé en ce qu'**il comprend au moins un composé choisi parmi les formules : 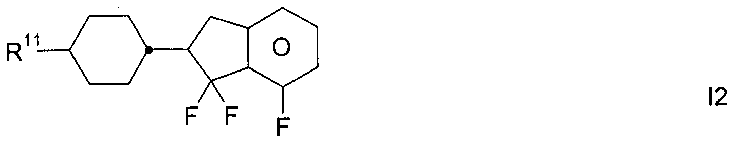 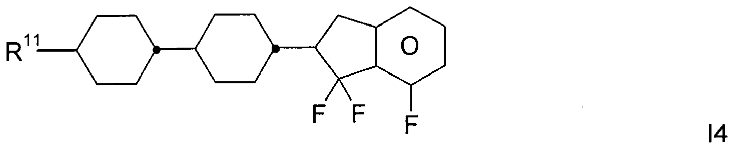 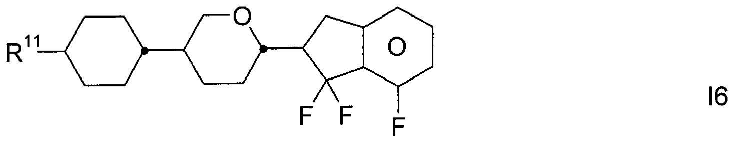 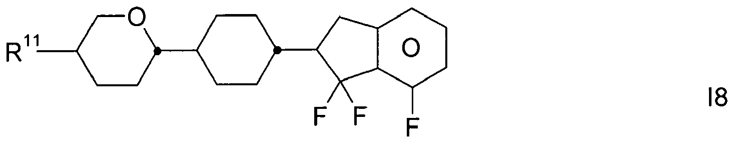 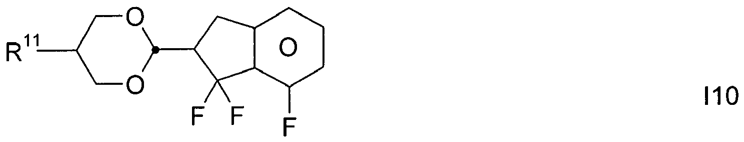 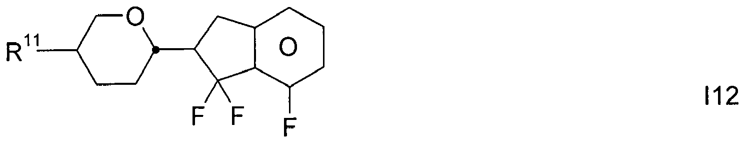 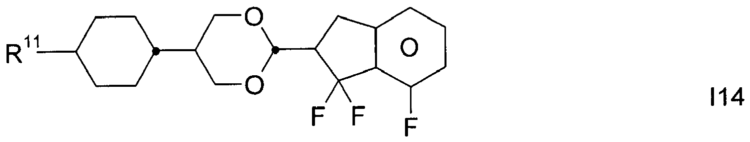 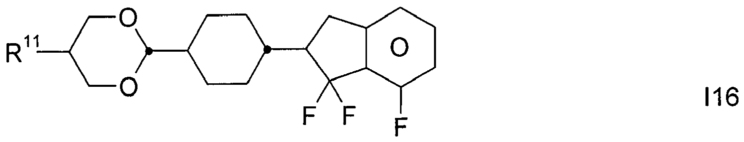 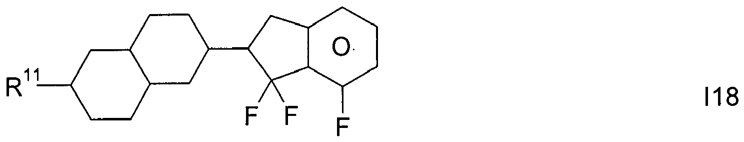 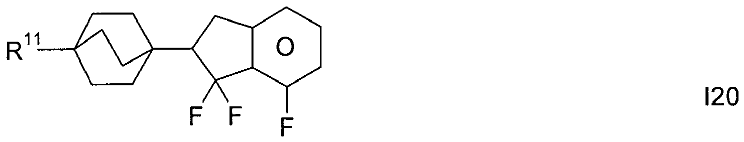 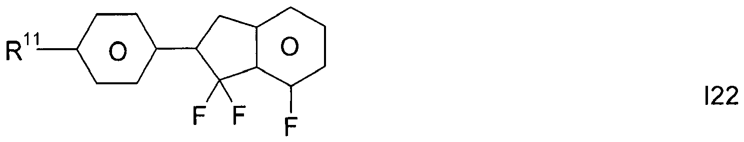 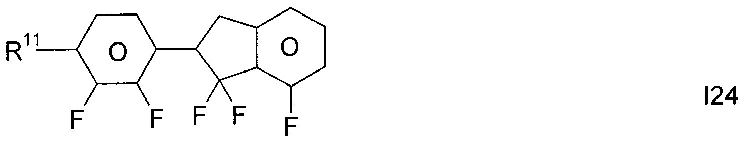 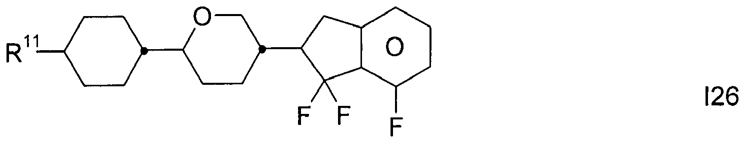 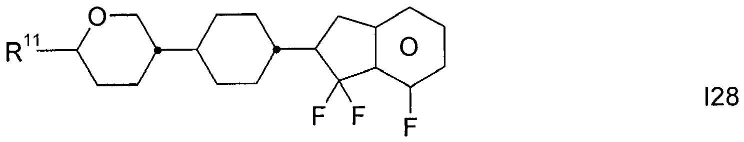 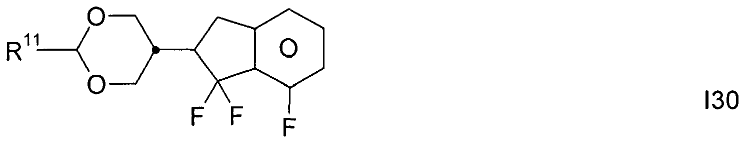 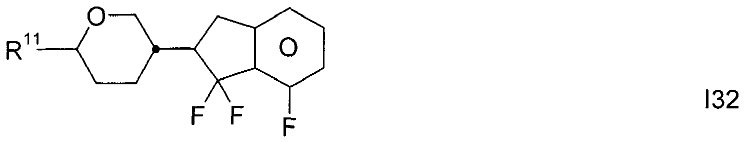 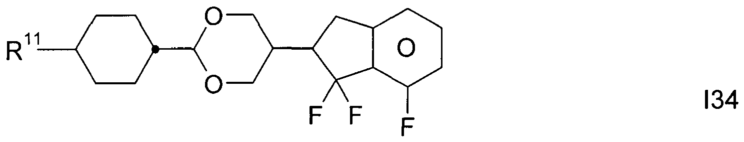 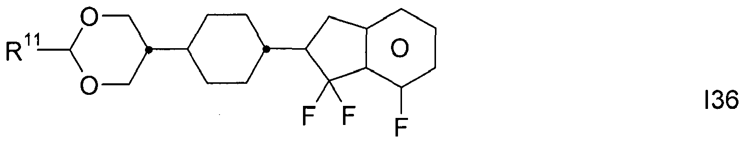 dans lesquelles :
R¹¹ présente les significations indiquées selon la revendication 1.

7. Affichage électro-optique présentant un adressage par matrice active basé sur l'effet ECB (biréfringence commandée électriquement), PALC (cristal liquide adressé par plasma) ou IPS (commutation dans le plan), **caractérisé en ce qu'**il contient, en tant que diélectrique, un
milieu cristallin liquide selon une ou plusieurs des revendications 1 à 6.
